# EUROPEAN PATENT APPLICATION

(11) **EP 4 692 925 A1**
(43) Date of publication of application: **11.02.2026**
(21) Application number: 25194801.4
(22) Date of filing: 08.08.2025
(51) Int. Cl.: G03B 21/00, G03B 33/12, H04N 9/31, G03B 21/20

(54) **PROJECTOR**

(30) Priority: 09.08.2024 JP 2024134102
(71) Applicant: Seiko Epson Corporation, Tokyo 160-8801 (JP)
(72) Inventor: YONEYAMA, Takuo, Suwa-shi, 392-8502 (JP)
(74) Representative: Lewis Silkin LLP

(57) **Abstract**

A projector includes a first liquid crystal panel configured to modulate light in a first wavelength band to generate first image light, a second liquid crystal panel configured to modulate light in a second wavelength band having a center wavelength longer than a center wavelength of the first wavelength band to generate second image light, a light combining element configured to combine the first image light and the second image light to generate composite image light, a projection optical system configured to project the composite image light, and an optical shifting device configured to shift an optical path of at least one of the first image light, the second image light, and the composite image light, wherein a thickness of a liquid crystal layer of the second liquid crystal panel is larger than a thickness of a liquid crystal layer of the first liquid crystal panel, and a frame rate of the first liquid crystal panel is higher than a frame rate of the second liquid crystal panel.

## Description

The present application is based on, and claims priority from JP Application Serial Number 2024-134102, filed August 9, 2024, the disclosure of which is hereby incorporated by reference herein in its entirety.

### BACKGROUND

### 1. Technical Field

The present disclosure relates to a projector.

### 2. Related Art

JP-A-2022-82000 discloses an optical path shifting device including a glass plate having an optical region which has a rectangular shape in plan view and on which light is incident, a first actuator that displaces the glass plate around a first axis that passes through the center of the optical region in plan view and forms an angle of less than 90° with a first side of the optical region, and a second actuator that displaces the glass plate around a second axis that passes through the center of the optical region and is orthogonal to the first axis.

JP-A-2022-82000 is an example of the related art.

When the optical path shifting device described in JP-A-2022-82000 is used, the response speed of the liquid crystal is preferably high. In order to increase the response speed of the liquid crystal, there is a method of reducing the thickness of the liquid crystal layer. However, when the thickness of the liquid crystal layer is reduced, a peak wavelength at which the rotation efficiency of the liquid crystal is maximized shifts to the short wavelength side. As a result, in particular, the rotation efficiency in the red wavelength band decreases, which leads to deterioration in color tone (excessive increase in color deviation) and decrease in brightness.

### SUMMARY

A projector according to an aspect of the present disclosure includes a first liquid crystal panel configured to modulate light in a first wavelength band to generate first image light, a second liquid crystal panel configured to modulate light in a second wavelength band having a center wavelength longer than a center wavelength of the first wavelength band to generate second image light, a light combining element configured to combine the first image light and the second image light to generate composite image light, a projection optical system configured to project the composite image light, and an optical shifting device configured to shift an optical path of at least one of the first image light, the second image light, and the composite image light, wherein a thickness of a liquid crystal layer of the second liquid crystal panel is larger than a thickness of a liquid crystal layer of the first liquid crystal panel, and a frame rate of the first liquid crystal panel is higher than a frame rate of the second liquid crystal panel.

### BRIEF DESCRIPTION OF THE DRAWINGS

FIG. 1 is a diagram showing a schematic configuration of a projector 1 according to a first embodiment.
FIG. 2 is a diagram showing a glass plate 24a of a biaxial shifting device 24 viewed from a dichroic prism 23.
FIG. 3 is a diagram showing how a position on an X-Y plane of a pixel PX contained in composite image light LC changes in accordance with a rotation of the glass plate 24a.
FIG. 4 is a timing chart showing an operation of the projector 1 according to the first embodiment.
FIG. 5 is a diagram showing a configuration of an optical shifting device 50B in a second embodiment.
FIG. 6 is a diagram showing a glass plate 26a of a uniaxial shifting device 26 viewed from a liquid crystal panel 22R.
FIG. 7 is a diagram showing how a position on the X-Y plane of a pixel PXr contained in red image light LR changes in accordance with a rotation of the glass plate 26a.
FIG. 8 is a diagram showing how a position on the X-Y plane of a pixel PXg contained in green image light LG and a position on the X-Y plane of a pixel PXb contained in blue image light LB change in accordance with a rotation of the glass plate 24a.
FIG. 9 is a timing chart showing an operation of a projector according to the second embodiment.
FIG. 10 is a timing chart showing a modified example of the operation of the projector according to the second embodiment.
FIG. 11 is a diagram showing a configuration of an optical shifting device 50C in a third embodiment.
FIG. 12 is a diagram showing a glass plate 27a of a uniaxial shifting device 27 viewed from the liquid crystal panel 22R.
FIG. 13 is a diagram showing how a position on the X-Y plane of the pixel PXr contained in the red image light LR changes in accordance with a rotation of the glass plate 27a.
FIG. 14 is a timing chart showing an operation of a projector according to the third embodiment.
FIG. 15 is a diagram showing a configuration of an optical shifting device 50D in a fourth embodiment.
FIG. 16 is a timing chart showing an operation of a projector according to the fourth embodiment.
FIG. 17 is a diagram showing a configuration of an optical shifting device 50E in a fifth embodiment.
FIG. 18 is a timing chart showing an operation of a projector according to the fifth embodiment.
FIG. 19 is a diagram showing a configuration of an optical shifting device 50F in a sixth embodiment.
FIG. 20 is a timing chart showing an operation of a projector according to the sixth embodiment.
FIG. 21 is a diagram illustrating a modified example of the second embodiment.

### DESCRIPTION OF EMBODIMENTS

Some embodiments of the present disclosure will hereinafter be described with reference to the drawings. Here, in the drawings described below, the scale of each member may be different from the actual one in some cases in order to show each member in a recognizable size.

### First Embodiment

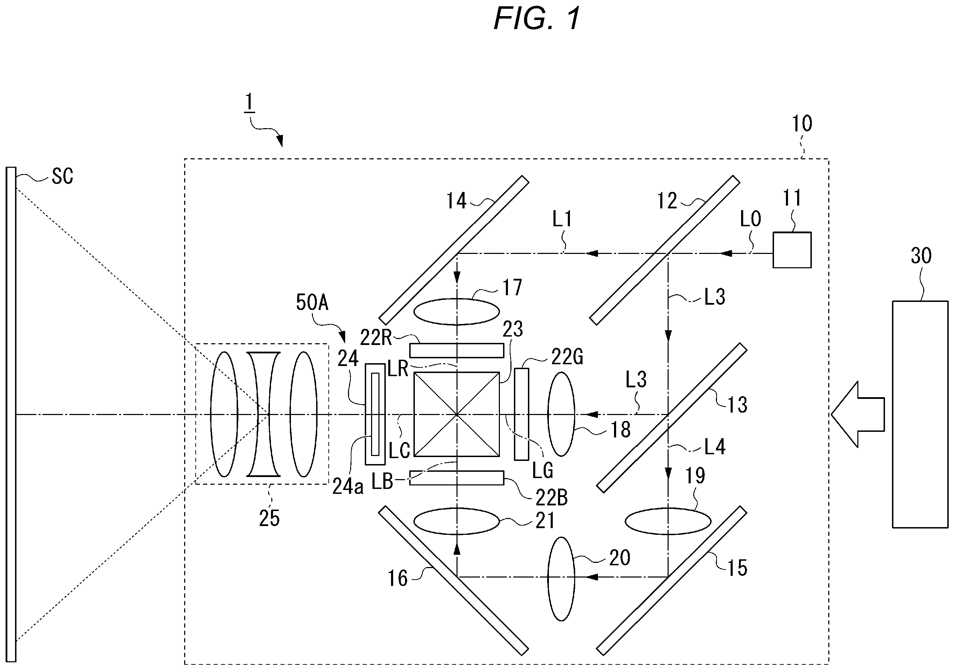

FIG. 1 is a diagram showing a schematic configuration of a projector 1 according to a first embodiment. As shown in FIG. 1, the projector 1 includes an optical device 10 and a control device 30. The control device 30 controls the optical device 10 based on a video signal supplied from a video supply device (not illustrated). The optical device 10 projects composite image light LC corresponding to an image based on the video signal on a projection screen SC. The video supply device is, for example, a personal computer, a tablet terminal, or a digital versatile disc (DVD) player.

The optical device 10 includes a light source 11, two dichroic mirrors 12, 13, three reflecting mirrors 14, 15, and 16, five relay lenses 17, 18, 19, 20, and 21, three liquid crystal panels 22R, 22G, and 22B, a dichroic prism 23, an optical shifting device 50A, and a projection optical system 25.

The light source 11 emits white light L0 to the dichroic mirror 12. The light source 11 is, for example, a halogen lamp, a mercury lamp, a light emitting diode, or a laser light source.

The dichroic mirror 12 separates the white light L0 into first colored light L1 and second colored light L2. For example, the first colored light L1 is red light, and the second colored light L2 is light of a mixed color of green and blue. The dichroic mirror 12 emits the first colored light L1 to the reflecting mirror 14 and emits the second colored light L2 to the dichroic mirror 13.

The dichroic mirror 13 separates the second colored light L2 into third colored light L3 and fourth colored light L4. For example, the third colored light L3 is green light, and the fourth colored light L4 is blue light. The dichroic mirror 13 emits the third colored light L3 to the relay lens 18 and emits the fourth colored light L4 to the relay lens 19.

The first colored light L1 emitted from the dichroic mirror 12 enters the liquid crystal panel 22R via the reflecting mirror 14 and the relay lens 17. The third colored light L3 emitted from the dichroic mirror 13 enters the liquid crystal panel 22G via the relay lens 18. The fourth colored light L4 emitted from the dichroic mirror 13 enters the liquid crystal panel 22B via the relay lens 19, the reflecting mirror 15, the relay lens 20, the reflecting mirror 16, and the relay lens 21.

The liquid crystal panels 22R, 22G, and 22B function as light modulation devices in the projector 1. For example, the liquid crystal panels 22R, 22G, and 22B are active-drive type liquid crystal panels having a plurality of pixels arranged in a matrix. The control device 30 controls the transmittance of the pixels provided to each of the liquid crystal panels 22R, 22G, and 22B based on the video signal.

The liquid crystal panel 22G modulates the green third colored light L3 to thereby generate green image light LG. The liquid crystal panel 22G is an example of a first liquid crystal panel that modulates light in a first wavelength band to thereby generate first image light. That is, in the present embodiment, the green third colored light L3 is an example of the light in the first wavelength band, and the green image light LG is an example of the first image light.

The liquid crystal panel 22R modulates the red first colored light L1 to thereby generate red image light LR. The liquid crystal panel 22R is an example of a second liquid crystal panel that modulates light in a second wavelength band having a center wavelength longer than the center wavelength of the first wavelength band to thereby generate second image light. That is, in the present embodiment, the red first colored light L1 is an example of the light in the second wavelength band, and the red image light LR is an example of the second image light.

The liquid crystal panel 22B modulates the blue fourth colored light L4 to thereby generate blue image light LB. The liquid crystal panel 22B is an example of a third liquid crystal panel that modulates light in a third wavelength band having a center wavelength shorter than the center wavelength of the first wavelength band to thereby generate third image light. That is, in the present embodiment, the blue fourth colored light L4 is an example of the light in the third wavelength band, and the blue image light beam LB is an example of the third image light.

In the present embodiment, the thickness of a liquid crystal layer of the liquid crystal panel 22R is larger than the thickness of a liquid crystal layer of the liquid crystal panel 22G. Specifically, the thickness of the liquid crystal layer of the liquid crystal panel 22R is a thickness in which a peak wavelength at which the rotation efficiency of the liquid crystal panel 22R is maximized falls within the wavelength band of the red first colored light L1. Further, the thickness of the liquid crystal layer of the liquid crystal panel 22G is a thickness in which a peak wavelength at which the rotation efficiency of the liquid crystal panel 22G is maximized falls within the wavelength band of the green third colored light L3.

The rotation efficiency is a rate at which linearly polarized light incident on the liquid crystal layer is converted into linearly polarized light orthogonal in polarization direction to that linearly polarized light. The rotation efficiency may be referred to as polarization conversion efficiency in some cases. As the thickness of the liquid crystal layer decreases, the peak wavelength at which the rotation efficiency is maximized shifts toward the short wavelength side. The red wavelength band is located at the longer wavelength side of the green wavelength band. Therefore, when the thickness of the liquid crystal layer of the liquid crystal panel 22R is set such that the peak wavelength at which the rotation efficiency of the liquid crystal panel 22R is maximized falls within the red wavelength band, and the thickness of the liquid crystal layer of the liquid crystal panel 22G is set such that the peak wavelength at which the rotation efficiency of the liquid crystal panel 22G is maximized falls within the green wavelength band, the thickness of the liquid crystal layer of the liquid crystal panel 22R is larger than the thickness of the liquid crystal layer of the liquid crystal panel 22G.

In the present embodiment, the thickness of the liquid crystal layer of the liquid crystal panel 22B is smaller than the thickness of the liquid crystal layer of the liquid crystal panel 22G. Specifically, the thickness of the liquid crystal layer of the liquid crystal panel 22B is a thickness in which the peak wavelength at which the rotation efficiency of the liquid crystal panel 22B is maximized falls within the wavelength band of the blue fourth colored light L4. The blue wavelength band is located at the shorter wavelength side of the green wavelength band. Therefore, when the thickness of the liquid crystal layer of the liquid crystal panel 22B is set such that the peak wavelength at which the rotation efficiency of the liquid crystal panel 22B is maximized falls within the blue wavelength band, the thickness of the liquid crystal layer of the liquid crystal panel 22B is smaller than the thickness of the liquid crystal layer of the liquid crystal panel 22G.

The dichroic prism 23 combines the red image light LR emitted from the liquid crystal panel 22R, the green image light LG emitted from the liquid crystal panel 22G, and the blue image light LB emitted from the liquid crystal panel 22B to thereby generate composite image light LC. The dichroic prism 23 is an example of a light combining element.

The optical shifting device 50A shifts an optical path of at least one of the red image light LR, the green image light LG, and the composite image light LC. The optical shifting device 50A in the present embodiment includes a biaxial shifting device 24 that shifts, along two axes, the optical path of the composite image light LC emitted from the dichroic prism 23. The biaxial shifting device 24 is disposed between the dichroic prism 23 and the projection optical system 25.

The biaxial shifting device 24 includes a glass plate 24a which is a light transmissive optical member that transmits the composite image light LC. The biaxial shifting device 24 shifts the optical path of the composite image light LC using light refraction by changing the posture of the glass plate 24a. The composite image light LC emitted from the dichroic prism 23 is incident on the projection optical system 25 via the biaxial shifting device 24. The projection optical system 25 projects the composite image light LC onto the projection screen SC in an enlarged manner. By the composite image light LC being projected on the projection screen SC, the image based on the video signal is displayed on the projection screen SC.

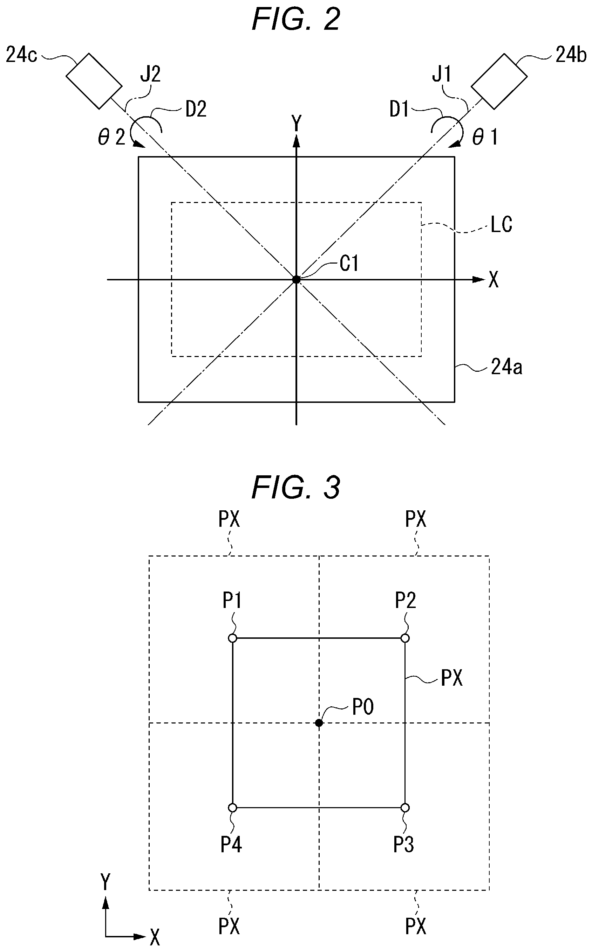

FIG. 2 is a diagram illustrating the glass plate 24a of the biaxial shifting device 24 viewed from the dichroic prism 23. As illustrated in FIG. 2, the composite image light LC emitted from the dichroic prism 23 is transmitted through the glass plate 24a. In FIG. 2, an X axis is a horizontal axis of the composite image light LC, and a Y axis is a vertical axis of the composite image light LC. The X axis corresponds to a horizontal axis of the liquid crystal panels 22R, 22G, and 22B, and the Y axis corresponds to a vertical axis of the liquid crystal panels 22R, 22G, and 22B.

A direction indicated by each of arrows along the X axis and the Y axis is defined as a positive (+) direction, and a direction opposite to the positive (+) direction is defined as a negative (-) direction. In the following description, the +X direction may be referred to as right or right side, and the -X direction may be referred to as left or left side, in some cases. Further, the +Y direction may be referred to as up or upper side, and the -Y direction may be referred to as down or lower side, in some cases.

As illustrated in FIG. 2, in the biaxial shifting device 24, the glass plate 24a is disposed to be rotatable around each of a first axis J1 and a second axis J2. The first axis J1 is orthogonal to a central axis C1 of the composite image light LC and has an inclination of 45 degrees counterclockwise with respect to the X axis. The second axis J2 is orthogonal to the central axis C1 of the composite image light LC and has an inclination of 90 degrees with respect to the first axis J1.

As shown in FIG. 2, the biaxial shifting device 24 includes a first actuator 24b that rotates the glass plate 24a around the first axis J1 and a second actuator 24c that rotates the glass plate 24a around the second axis J2. The operations of the first actuator 24b and the second actuator 24c are controlled by the control device 30.

In the following description, a rotation angle around the first axis J1 is referred to as a first rotation angle θ1, and a rotation angle around the second axis J2 is referred to as a second rotation angle θ2. FIG. 2 shows a state of the glass plate 24a when both the first rotation angle θ1 and the second rotation angle θ2 are 0 degree. When both the first rotation angle θ1 and the second rotation angle θ2 are 0 degree, the glass plate 24a is parallel to an X-Y plane and is orthogonal to the central axis C1 of the composite image light LC.

In the following description, the state of the glass plate 24a when both the first rotation angle θ1 and the second rotation angle θ2 are 0 degree is referred to as a reference state. When the glass plate 24a in such a reference state rotates around the first axis J1 in the direction indicated by the arrow D1, the first rotation angle θ1 has a positive value. On the other hand, when the glass plate 24a in the reference state rotates around the first axis J1 in the direction opposite to the direction indicated by the arrow D1, the first rotation angle θ1 has a negative value. When the glass plate 24a in the reference state rotates about the second axis J2 in the direction indicated by the arrow D2, the second rotation angle θ2 has a positive value. On the other hand, when the glass plate 24a in the reference state rotates around the second axis J2 in the direction opposite to the direction indicated by the arrow D2, the second rotation angle θ2 has a negative value.

FIG. 3 is a diagram showing how a position on the X-Y plane of a pixel PX contained in the composite image light LC changes in accordance with the rotation of the glass plate 24a. The position of the pixel PX when the glass plate 24a is in the reference state, that is, when both the first rotation angle θ1 and the second rotation angle θ2 are 0 degree is defined as a reference position P0 of the pixel PX. Note that, as an example, the position of the pixel PX is a position of a center point of the pixel PX.

When the first rotation angle θ1 is a positive first angle a1 and the second rotation angle θ2 is 0 degree, the position of the pixel PX is a first position P1 shifted from the reference position P0 to the upper left by a half pixel. When the first rotation angle θ1 is 0 degree and the second rotation angle θ2 is a positive third angle b1, the position of the pixel PX is a second position P2 shifted from the reference position P0 to the upper right by a half pixel. When the first rotation angle θ1 is a negative second angle a2 and the second rotation angle θ2 is 0 degree, the position of the pixel PX is a third position P3 shifted from the reference position P0 to the lower right by a half pixel. When the first rotation angle θ1 is 0 degree and the second rotation angle θ2 is a negative fourth angle b2, the position of the pixel PX is a fourth position P4 shifted from the reference position P0 to the lower left by a half pixel.

As described above, a specific configuration of the biaxial shifting device 24 that shifts the optical path of the composite image light LC along two axes is known as described in JP-A-2022-82000. Therefore, in the present specification, a description related to a specific configuration of the biaxial shifting device 24 will be omitted.

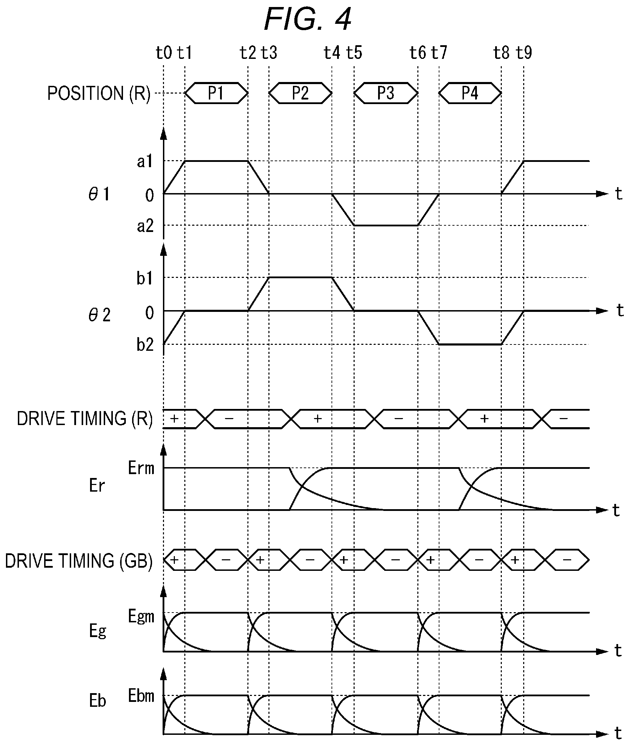

FIG. 4 is a timing chart illustrating a temporal correspondence relationship among the position of the pixel PX contained in the composite image light LC, the first rotation angle θ1, the second rotation angle θ2, drive timings of the liquid crystal panels 22R, 22G, and 22B, and rotation efficiency of each of the liquid crystal panels 22R, 22G, and 22B.

In FIG. 4, "POSITION (R)" indicates the position of the pixel PX contained in the composite image light LC. "DRIVE TIMING (R)" indicates the drive timing of the liquid crystal panel 22R. "DRIVE TIMING (GB)" indicates the drive timing of the liquid crystal panels 22G, 22B. "Er" indicates the rotation efficiency of the liquid crystal panel 22R. "Eg" indicates the rotation efficiency of the liquid crystal panel 22G. "Eb" indicates the rotation efficiency of the liquid crystal panel 22B.

As shown in FIG. 4, in a period from time t0 to time t1, the control device 30 controls the first actuator 24b to change the first rotation angle θ1 of the glass plate 24a from 0 degree to the positive first angle a1. Further, in the period from the time t0 to the time t1, the control device 30 controls the second actuator 24c to change the second rotation angle θ2 of the glass plate 24a from the negative fourth angle b2 to 0 degree. As a result, in the period from the time t0 to the time t1, the pixel PX contained in the composite image light LC is shifted from the fourth position P4 toward the first position P1.

When the first rotation angle θ1 reaches the positive first angle a1 at the time t1, the control device 30 holds the first rotation angle θ1 at the positive first angle a1 in a period from the time t1 to time t2 by controlling the first actuator 24b. Further, when the second rotation angle θ2 reaches 0 degree at the time t1, the control device 30 controls the second actuator 24c to thereby hold the second rotation angle θ2 at 0 degree in the period from the time t1 to the time t2. As a result, in the period from the time t1 to the time t2, the position of the pixel PX contained in the composite image light LC is held at the first position P1.

In a period from the time t2 to time t3, the control device 30 changes the first rotation angle θ1 of the glass plate 24a from the positive first angle a1 to 0 degree by controlling the first actuator 24b. Further, in the period from the time t2 to the time t3, the control device 30 controls the second actuator 24c to thereby change the second rotation angle θ2 of the glass plate 24a from 0 degree to the positive third angle b1. As a result, in the period from the time t2 to the time t3, the pixel PX contained in the composite image light LC is shifted from the first position P1 toward the second position P2.

When the first rotation angle θ1 reaches 0 degree at the time t3, the control device 30 controls the first actuator 24b to thereby hold the first rotation angle θ1 at 0 degree in a period from the time t3 to time t4. Further, when the second rotation angle θ2 reaches the positive third angle b1 at the time t3, the control device 30 holds the second rotation angle θ2 at the positive third angle b1 in the period from the time t3 to the time t4 by controlling the second actuator 24c. As a result, in the period from the time t3 to the time t4, the position of the pixel PX contained in the composite image light LC is held at the second position P2.

In a period from the time t4 to time t5, the control device 30 controls the first actuator 24b to thereby change the first rotation angle θ1 of the glass plate 24a from 0 degree to the negative second angle a2. Further, in the period from the time t4 to the time t5, the control device 30 controls the second actuator 24c to thereby change the second rotation angle θ2 of the glass plate 24a from the positive third angle b1 to 0 degree. As a result, in the period from the time t4 to the time t5, the pixel PX contained in the composite image light LC is shifted from the second position P2 toward the third position P3.

When the first rotation angle θ1 reaches the negative second angle a2 at the time t5, the control device 30 holds the first rotation angle θ1 at the negative second angle a2 in a period from the time t5 to time t6 by controlling the first actuator 24b. Further, when the second rotation angle θ2 reaches 0 degree at the time t5, the control device 30 controls the second actuator 24c to thereby hold the second rotation angle θ2 at 0 degree in the period from the time t5 to the time t6. As a result, in the period from the time t5 to the time t6, the position of the pixel PX contained in the composite image light LC is held at the third position P3.

In a period from the time t6 to time t7, the control device 30 changes the first rotation angle θ1 of the glass plate 24a from the negative second angle a2 to 0 degree by controlling the first actuator 24b. Further, in the period from the time t6 to the time t7, the control device 30 controls the second actuator 24c to thereby change the second rotation angle θ2 of the glass plate 24a from 0 degree to the negative fourth angle b2. As a result, in the period from the time t6 to the time t7, the pixel PX contained in the composite image light LC is shifted from the third position P3 toward the fourth position P4.

When the first rotation angle θ1 reaches 0 degree at the time t7, the control device 30 controls the first actuator 24b to thereby hold the first rotation angle θ1 at 0 degree in a period from the time t7 to time t8. Further, when the second rotation angle θ2 reaches the negative fourth angle b2 at the time t7, the control device 30 holds the second rotation angle θ2 at the negative fourth angle b2 in the period from the time t7 to the time t8 by controlling the second actuator 24c. As a result, in the period from the time t7 to the time t8, the position of the pixel PX contained in the composite image light LC is held at the fourth position P4.

After the time t8, the control device 30 repeats the operations performed in a period from the time t0 to the time t8. For example, in the period from the time t8 to time t9, the control device 30 controls the first actuator 24b to thereby change the first rotation angle θ1 of the glass plate 24a from 0 degree to the positive first angle a1. Further, in the period from the time t8 to the time t9, the control device 30 controls the second actuator 24c to thereby change the second rotation angle θ2 of the glass plate 24a from the negative fourth angle b2 to 0 degree. As a result, in the period from the time t8 to the time t9, the pixel PX contained in the composite image light LC is shifted from the fourth position P4 toward the first position P1.

The period from the time t0 to the time t8 corresponds to one frame of the video signal supplied to the projector 1. A frame rate of the liquid crystal panel 22R is twice a frame rate of the video signal supplied to the projector 1. A frame rate of the liquid crystal panels 22G, 22B is twice the frame rate of the liquid crystal panel 22R. That is, the frame rate of the liquid crystal panels 22G, 22B is four times the frame rate of the video signal.

The control device 30 controls the drive timing of the liquid crystal panels 22G, 22B such that the rotation efficiency Eg of the liquid crystal panel 22G becomes the maximum value Egm and the rotation efficiency Eb of the liquid crystal panel 22B becomes the maximum value Ebm in the periods in which the pixel PX contained in the composite image light LC is located respectively at the first position P1, the second position P2, the third position P3, and the fourth position P4.

For example, in a first period from the time t0 to the time t2, the control device 30 applies a voltage corresponding to an image to be displayed at the first position P1 to the liquid crystal layers of the liquid crystal panels 22G, 22B. Specifically, in the first half of the first period, the control device 30 applies a positive voltage corresponding to the image to be displayed at the first position P1 to the liquid crystal layers of the liquid crystal panels 22G, 22B. In the second half of the first period, the control device 30 applies a negative voltage corresponding to the image to be displayed at the first position P1 to the liquid crystal layers of the liquid crystal panels 22G, 22B.

In a second period from the time t2 to the time t4, the control device 30 applies a voltage corresponding to an image to be displayed at the second position P2 to the liquid crystal layers of the liquid crystal panels 22G, 22B. Specifically, in the first half of the second period, the control device 30 applies a positive voltage corresponding to the image to be displayed at the second position P2 to the liquid crystal layers of the liquid crystal panels 22G, 22B. In the second half of the second period, the control device 30 applies a negative voltage corresponding to the image to be displayed at the second position P2 to the liquid crystal layers of the liquid crystal panels 22G, 22B.

In a third period from the time t4 to the time t6, the control device 30 applies a voltage corresponding to an image to be displayed at the third position P3 to the liquid crystal layers of the liquid crystal panels 22G, 22B. Specifically, in the first half of the third period, the control device 30 applies a positive voltage corresponding to the image to be displayed at the third position P3 to the liquid crystal layers of the liquid crystal panels 22G, 22B. In the second half of the third period, the control device 30 applies a negative voltage corresponding to the image to be displayed at the third position P3 to the liquid crystal layers of the liquid crystal panels 22G, 22B.

In a fourth period from the time t6 to the time t8, the control device 30 applies a voltage corresponding to an image to be displayed at the fourth position P4 to the liquid crystal layers of the liquid crystal panels 22G, 22B. Specifically, in the first half of the fourth period, the control device 30 applies a positive voltage corresponding to the image to be displayed at the fourth position P4 to the liquid crystal layers of the liquid crystal panels 22G, 22B. In the second half of the fourth period, the control device 30 applies a negative voltage corresponding to the image to be displayed at the fourth position P4 to the liquid crystal layers of the liquid crystal panels 22G, 22B.

By the control device 30 controlling the drive timing of the liquid crystal panels 22G, 22B as described above, the rotation efficiency Eg of the liquid crystal panel 22G becomes the maximum value Egm and the rotation efficiency Eb of the liquid crystal panel 22B becomes the maximum value Ebm in the periods in which the pixel PX contained in the composite image light LC is located respectively at the first position P1, the second position P2, the third position P3, and the fourth position P4.

On the other hand, the control device 30 controls the drive timing of the liquid crystal panel 22R such that the rotation efficiency Er of the liquid crystal panel 22R becomes the maximum value Erm in the periods in which the pixel PX contained in the composite image light LC is located respectively at the first position P1 and the third position P3.

For example, in a fifth period from the central time (not shown) of the fourth period of the previous frame to the central time of the second period of the present frame, the control device 30 applies a voltage corresponding to an image to be displayed at the first position P1 to the liquid crystal layer of the liquid crystal panel 22R. Specifically, in the first half of the fifth period, the control device 30 applies a positive voltage corresponding to the image to be displayed at the first position P1 to the liquid crystal layer of the liquid crystal panel 22R. In the second half of the fifth period, the control device 30 applies a negative voltage corresponding to the image to be displayed at the first position P1 to the liquid crystal layer of the liquid crystal panel 22R.

In a sixth period from the central time of the second period to the central time of the fourth period, the control device 30 applies a voltage corresponding to an image to be displayed at the third position P3 to the liquid crystal layer of the liquid crystal panel 22R. Specifically, in the first half of the sixth period, the control device 30 applies a positive voltage corresponding to the image to be displayed at the third position P3 to the liquid crystal layer of the liquid crystal panel 22R. In the second half of the sixth period, the control device 30 applies a negative voltage corresponding to the image to be displayed at the third position P3 to the liquid crystal layer of the liquid crystal panel 22R.

By the control device 30 controlling the drive timing of the liquid crystal panel 22R as described above, the rotation efficiency Er of the liquid crystal panel 22R becomes the maximum value Erm in the periods in which the pixel PX contained in the composite image light LC is located respectively at the first position P1 and the third position P3.

The smaller the thickness of the liquid crystal layer is, the faster the response speed of the liquid crystal layer is. Therefore, the time from when application of the positive voltage is started until the rotation efficiency reaches the maximum value is shorter in the liquid crystal panels 22G, 22B than in the liquid crystal panel 22R. Further, the time from when application of the negative voltage is ended until the rotation efficiency reaches the minimum value is also shorter in the liquid crystal panels 22G, 22B than in the liquid crystal panel 22R.

As illustrated in FIG. 4, in the periods in which the pixel PX contained in the composite image light LC is located respectively at the second position P2 and the fourth position P4, a region where the rotation efficiency Er increases and a region where the rotation efficiency Er decreases in the liquid crystal panel 22R overlap each other. Therefore, in the periods in which the pixel PX contained in the composite image light LC is located respectively at the second position P2 and the fourth position P4, although the red image is not turned off, it is conceivable that significant color breakup in a direction from red toward cyan does not occur.

As described hereinabove, the projector 1 according to the first embodiment includes the liquid crystal panel 22G that modulates the green third colored light L3 to generate the green image light LG, the liquid crystal panel 22R that modulates the red first colored light L1 to generate the red image light LR, the dichroic prism 23 that combines the green image light LG and the red image light LR to generate the composite image light LC, the projection optical system 25 that projects the composite image light LC, and the optical shifting device 50A that shifts the optical path of at least one of the green image light LG, the red image light LR, and the composite image light LC. The thickness of the liquid crystal layer of the liquid crystal panel 22R is larger than the thickness of the liquid crystal layer of the liquid crystal panel 22G. The frame rate of the liquid crystal panel 22G is higher than the frame rate of the liquid crystal panel 22R.

When the optical shifting device 50A as described above is used, the response speed of the liquid crystal is preferably high. In order to increase the response speed of the liquid crystal, there is a method of reducing the thickness of the liquid crystal layer. However, when the thickness of the liquid crystal layer is reduced, a peak wavelength at which the rotation efficiency of the liquid crystal is maximized shifts to the short wavelength side. As a result, in particular, the rotation efficiency in the red wavelength band decreases, which leads to deterioration in color tone (excessive increase in color deviation) and decrease in brightness.

In order to solve the problem caused by using such an optical shifting device 50A, the first embodiment adopts a configuration in which the thickness of the liquid crystal layer of the liquid crystal panel 22R is larger than the thickness of the liquid crystal layer of the liquid crystal panel 22G. Thus, it is possible to suppress a decrease in the rotation efficiency of the liquid crystal panel 22R that modulates the red first colored light L1 to generate the red image light LR. On the other hand, since the thickness of the liquid crystal layer of the liquid crystal panel 22R is larger than that of the liquid crystal panel 22G, the response speed of the liquid crystal panel 22R is slower than that of the liquid crystal panel 22G. In contrast, the first embodiment adopts a configuration in which the frame rate of the liquid crystal panel 22G is higher than the frame rate of the liquid crystal panel 22R. That is, since the frame rate of the liquid crystal panel 22R is lower than the frame rate of the liquid crystal panel 22G, there is no problem even when the response speed of the liquid crystal panel 22R is slow. As described above, according to the first embodiment, when the optical shifting device 50A is used, it is possible to prevent the deterioration in color and the decrease in brightness from being incurred due to in particular the decrease in the rotation efficiency in the red wavelength band. Note that such advantages can similarly be obtained also in the second to sixth embodiments described later.

In the projector 1 according to the first embodiment, the optical shifting device 50A includes the biaxial shifting device 24 that shifts the optical path of the composite image light LC along the two axes, the frame rate of the liquid crystal panel 22R is twice the frame rate of the video signal supplied to the projector 1, and the frame rate of the liquid crystal panel 22G is twice the frame rate of the liquid crystal panel 22R.

According to such a first embodiment, when the optical shifting device 50A includes the biaxial shifting device 24 that shifts the optical path of the composite image light LC along the two axes, it is possible to prevent the deterioration in color and the decrease in brightness from being incurred due to in particular the decrease in the rotation efficiency in the red wavelength band.

The projector 1 according to the first embodiment further includes the liquid crystal panel 22B that modulates the blue fourth colored light L4 to generate the blue image light LB, the dichroic prism 23 combines the red image light LR, the green image light LG, and the blue image light LB to generate the composite image light LC, and the frame rate of the liquid crystal panel 22B is twice the frame rate of the liquid crystal panel 22R.

According to such a first embodiment as described above, when the projector 1 further includes the liquid crystal panel 22B, it is possible to prevent the deterioration in color and the decrease in brightness from being incurred due to in particular the decrease in the rotation efficiency in the red wavelength band while realizing the high definition of the image projected from the projector 1.

### Second Embodiment

Then, a second embodiment of the present disclosure will be described.

A projector according to the second embodiment is different from the projector 1 according to the first embodiment in that an optical shifting device 50B different from the optical shifting device 50A described in the first embodiment is provided. Therefore, hereinafter, the second embodiment will be described while focusing on the optical shifting device 50B which is the difference from the first embodiment.

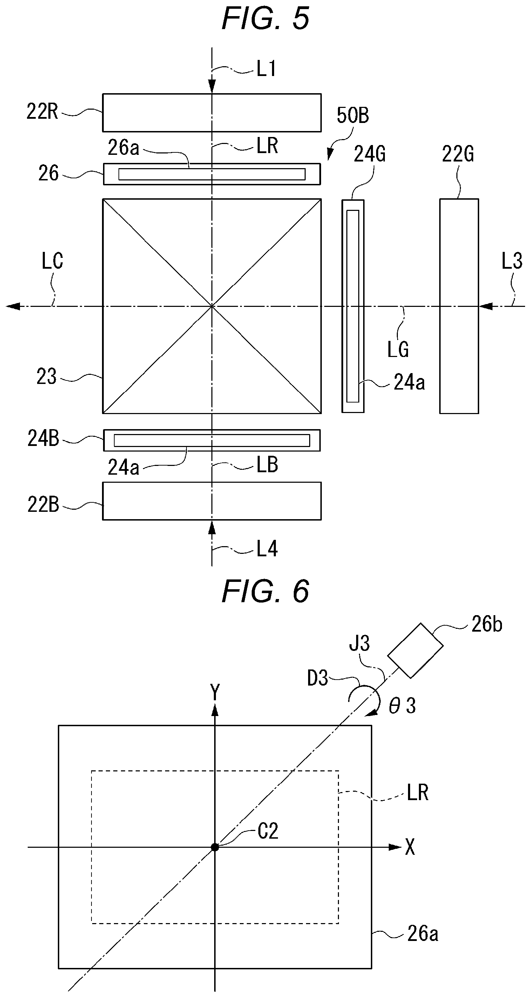

FIG. 5 is a diagram illustrating a configuration of the optical shifting device 50B in the second embodiment. As illustrated in FIG. 5, the optical shifting device 50B includes a uniaxial shifting device 26, a first biaxial shifting device 24G, and a second biaxial shifting device 24B.

The uniaxial shifting device 26 is disposed between the liquid crystal panel 22R and the dichroic prism 23. The uniaxial shifting device 26 shifts the optical path of the red image light LR emitted from the liquid crystal panel 22R along a single axis.

The uniaxial shifting device 26 includes a glass plate 26a which is a light transmissive optical member that transmits the red image light LR. The uniaxial shifting device 26 shifts the optical path of the red image light LR using light refraction by changing the posture of the glass plate 26a. The red image light LR emitted from the liquid crystal panel 22R is incident on the dichroic prism 23 via the uniaxial shifting device 26.

The first biaxial shifting device 24G is disposed between the liquid crystal panel 22G and the dichroic prism 23. The first biaxial shifting device 24G shifts the optical path of the green image light LG emitted from the liquid crystal panel 22G along two axes. The configuration of the first biaxial shifting device 24G is the same as the configuration of the biaxial shifting device 24 described in the first embodiment. That is, the first biaxial shifting device 24G includes the glass plate 24a that transmits the green image light LG. The first biaxial shifting device 24G shifts the optical path of the green image light LG using light refraction by changing the posture of the glass plate 24a. The green image light LG emitted from the liquid crystal panel 22G is incident on the dichroic prism 23 via the first biaxial shifting device 24G.

The second biaxial shifting device 24B is disposed between the liquid crystal panel 22B and the dichroic prism 23. The second biaxial shifting device 24B shifts the optical path of the blue image light LB emitted from the liquid crystal panel 22B along two axes. The configuration of the second biaxial shifting device 24B is the same as the configuration of the biaxial shifting device 24 described in the first embodiment. That is, the second biaxial shifting device 24B includes the glass plate 24a that transmits the blue image light LB. The second biaxial shifting device 24B shifts the optical path of the blue image light LB using light refraction by changing the posture of the glass plate 24a. The blue image light LB emitted from the liquid crystal panel 22B is incident on the dichroic prism 23 via the second biaxial shifting device 24B.

The dichroic prism 23 combines the red image light LR incident via the uniaxial shifting device 26, the green image light LG incident via the first biaxial shifting device 24G, and the blue image light LB incident via the second biaxial shifting device 24B to generate the composite image light LC.

FIG. 6 is a diagram showing the glass plate 26a of the uniaxial shifting device 26 viewed from the liquid crystal panel 22R. As illustrated in FIG. 6, the red image light LR emitted from the liquid crystal panel 22R is transmitted through the glass plate 26a. In the uniaxial shifting device 26, the glass plate 26a is disposed to be rotatable around a third axis J3. The third axis J3 is orthogonal to the central axis C2 of the red image light LR and has an inclination of 45 degrees counterclockwise with respect to the X axis.

As shown in FIG. 6, the uniaxial shifting device 26 includes a third actuator 26b that rotates the glass plate 26a around the third axis J3. An operation of the third actuator 26b is controlled by the control device 30. In the following description, the rotation angle about the third axis J3 is referred to as a third rotation angle θ3. FIG. 6 shows a state of the glass plate 26a when the third rotation angle θ3 is 0 degree. When the third rotation angle θ3 is 0 degree, the glass plate 26a is parallel to the X-Y plane and is orthogonal to the central axis C2 of the red image light LR.

In the following description, the state of the glass plate 26a when the third rotation angle θ3 is 0 degree is referred to as a reference state. When the glass plate 26a in such a reference state rotates around the third axis J3 in the direction indicated by the arrow D3, the third rotation angle θ3 has a positive value. On the other hand, when the glass plate 26a in the reference state rotates around the third axis J3 in the direction opposite to the direction indicated by the arrow D3, the third rotation angle θ3 has a negative value.

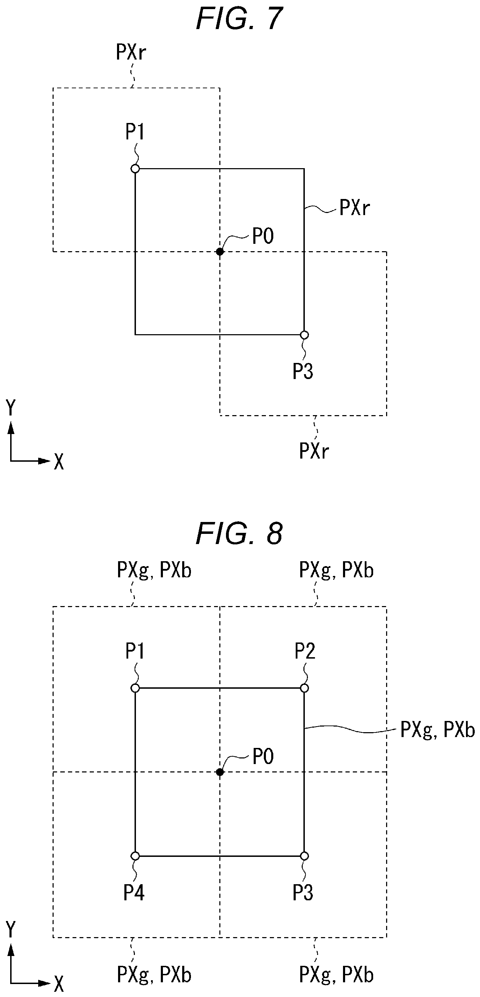

FIG. 7 is a diagram showing how a position on the X-Y plane of the pixel PXr contained in the red image light LR changes in accordance with a rotation of the glass plate 26a. The position of the pixel PXr when the glass plate 26a is in the reference state, that is, when the third rotation angle θ3 is 0 degree is defined as a reference position P0 of the pixel PXr. Note that, as an example, the position of the pixel PXr is a position of a center point of the pixel PXr.

When the third rotation angle θ3 is a positive fifth angle c1, the position of the pixel PXr is the first position P1 shifted from the reference position P0 to the upper left by a half pixel. When the third rotation angle θ3 is a negative sixth angle c2, the position of the pixel PXr is the third position P3 shifted from the reference position P0 to the lower right by a half pixel.

As described above, a specific configuration of the uniaxial shifting device 26 that shifts the optical path of the red image light LR along the single axis is known as described in JP-A-2018-54974. Therefore, in the present specification, a description related to a specific configuration of the uniaxial shifting device 26 will be omitted.

FIG. 8 is a diagram showing how a position on the X-Y plane of a pixel PXg contained in the green image light LG and a position on the X-Y plane of a pixel PXb contained in the blue image light LB change in accordance with rotations of the glass plates 24a of the first biaxial shifting device 24G and the second biaxial shifting device 24B. The positions of the pixels PXg, PXb when both the first rotation angle θ1 and the second rotation angle θ2 are 0 degree are each defined as the reference position P0 of the pixel PX.

When the first rotation angle θ1 is the positive first angle a1 and the second rotation angle θ2 is 0 degree, the positions of the pixels PXg, PXb are the first position P1 shifted from the reference position P0 to the upper left by a half pixel. When the first rotation angle θ1 is 0 degree and the second rotation angle θ2 is the positive third angle b1, the positions of the pixels PXg, PXb are the second position P2 shifted by a half pixel to the upper right from the reference position P0. When the first rotation angle θ1 is the negative second angle a2 and the second rotation angle θ2 is 0 degree, the positions of the pixels PXg, PXb are the third position P3 shifted from the reference position P0 to the lower right by a half pixel. When the first rotation angle θ1 is 0 degree and the second rotation angle θ2 is the negative fourth angle b2, the positions of the pixels PXg, PXb are the fourth position P4 shifted from the reference position P0 to the lower left by a half pixel.

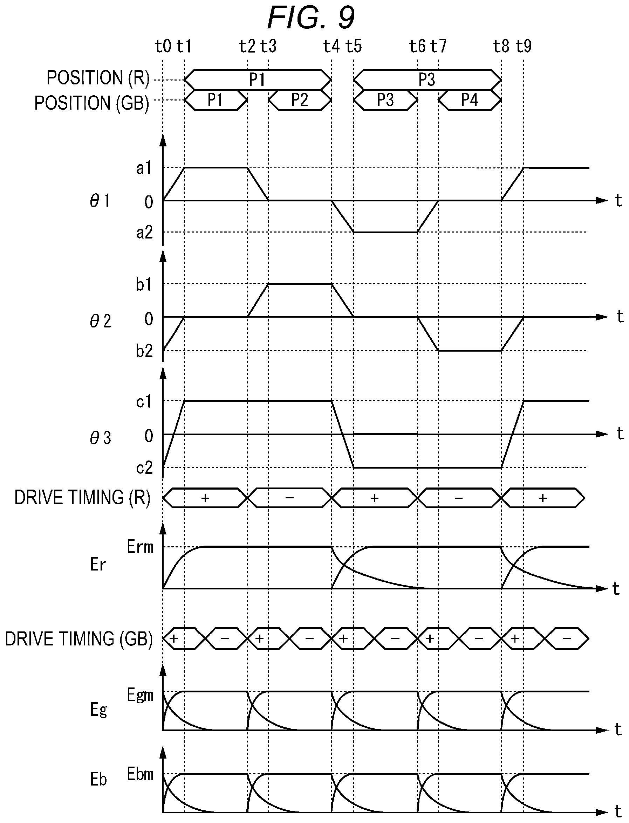

FIG. 9 is a timing chart illustrating a temporal correspondence relationship among the positions of the pixels PXr, PXg, and PXb, the first rotation angle θ1, the second rotation angle θ2, the third rotation angle θ3, drive timings of the liquid crystal panels 22R, 22G, and 22B, and rotation efficiency of each of the liquid crystal panels 22R, 22G, and 22B.

In FIG. 9, "POSITION (R)" indicates the position of the pixel PXr contained in the red image light LR. "POSITION (GB)" indicates the position of the pixel PXg contained in the green image light LG and the position of the pixel PXb contained in the blue image light LB. "DRIVE TIMING (R)" indicates the drive timing of the liquid crystal panel 22R. "DRIVE TIMING (GB)" indicates the drive timing of the liquid crystal panels 22G, 22B. "Er" indicates the rotation efficiency of the liquid crystal panel 22R. "Eg" indicates the rotation efficiency of the liquid crystal panel 22G. "Eb" indicates the rotation efficiency of the liquid crystal panel 22B.

In the period from time t0 to time t1, the control device 30 controls the first actuator 24b of the first biaxial shifting device 24G to thereby change the first rotation angle θ1 of the glass plate 24a of the first biaxial shifting device 24G from 0 degree to the positive first angle a1. Further, in the period from the time t0 to the time t1, the control device 30 controls the second actuator 24c of the first biaxial shifting device 24G to thereby change the second rotation angle θ2 of the glass plate 24a of the first biaxial shifting device 24G from the negative fourth angle b2 to 0 degree. In the period from the time t0 to the time t1, the control device 30 controls the second biaxial shifting device 24B in substantially the same manner as in the first biaxial shifting device 24G. As a result, in the period from the time t0 to the time t1, the pixel PXg contained in the green image light LG and the pixel PXb contained in the blue image light LB are shifted from the fourth position P4 toward the first position P1.

When the first rotation angle θ1 of the glass plate 24a of the first biaxial shifting device 24G reaches the positive first angle a1 at the time t1, the control device 30 controls the first actuator 24b of the first biaxial shifting device 24G to thereby hold the first rotation angle θ1 of the glass plate 24a of the first biaxial shifting device 24G at the positive first angle a1 in a period from the time t1 to time t2. Further, when the second rotation angle θ2 of the glass plate 24a of the first biaxial shifting device 24G reaches 0 degree at the time t1, the control device 30 controls the second actuator 24c of the first biaxial shifting device 24G to thereby hold the second rotation angle θ2 of the glass plate 24a of the first biaxial shifting device 24G at 0 degree in the period from the time t1 to the time t2. In the period from the time t1 to the time t2, the control device 30 controls the second biaxial shifting device 24B in substantially the same manner as in the first biaxial shifting device 24G. As a result, in the period from the time t1 to the time t2, the position of the pixel PXg contained in the green image light LG and the position of the pixel PXb contained in the blue image light LB are held at the first position P1.

In a period from the time t2 to time t3, the control device 30 controls the first actuator 24b of the first biaxial shifting device 24G to thereby change the first rotation angle θ1 of the glass plate 24a of the first biaxial shifting device 24G from the positive first angle a1 to 0 degree. Further, in the period from the time t2 to the time t3, the control device 30 controls the second actuator 24c of the first biaxial shifting device 24G to thereby change the second rotation angle θ2 of the glass plate 24a of the first biaxial shifting device 24G from 0 degree to the positive third angle b1. In the period from the time t2 to the time t3, the control device 30 controls the second biaxial shifting device 24B in substantially the same manner as in the first biaxial shifting device 24G. As a result, in the period from the time t2 to the time t3, the pixel PXg contained in the green image light LG and the pixel PXb contained in the blue image light LB are shifted from the first position P1 toward the second position P2.

When the first rotation angle θ1 of the glass plate 24a of the first biaxial shifting device 24G reaches 0 degree at the time t3, the control device 30 controls the first actuator 24b of the first biaxial shifting device 24G to thereby hold the first rotation angle θ1 of the glass plate 24a of the first biaxial shifting device 24G at 0 degree in a period from the time t3 to time t4. Further, when the second rotation angle θ2 of the glass plate 24a of the first biaxial shifting device 24G reaches the positive third angle b1 at the time t3, the control device 30 controls the second actuator 24c of the first biaxial shifting device 24G to thereby hold the second rotation angle θ2 of the glass plate 24a of the first biaxial shifting device 24G at the positive third angle b1 in the period from the time t3 to the time t4. In the period from the time t3 to the time t4, the control device 30 controls the second biaxial shifting device 24B in substantially the same manner as in the first biaxial shifting device 24G. As a result, in the period from the time t3 to the time t4, the position of the pixel PXg contained in the green image light LG and the position of the pixel PXb contained in the blue image light LB are held at the second position P2.

In a period from the time t4 to time t5, the control device 30 controls the first actuator 24b of the first biaxial shifting device 24G to thereby change the first rotation angle θ1 of the glass plate 24a of the first biaxial shifting device 24G from 0 degree to the negative second angle a2. Further, in the period from the time t4 to the time t5, the control device 30 controls the second actuator 24c of the first biaxial shifting device 24G to thereby change the second rotation angle θ2 of the glass plate 24a of the first biaxial shifting device 24G from the positive third angle b1 to 0 degree. In the period from the time t4 to the time t5, the control device 30 controls the second biaxial shifting device 24B in substantially the same manner as in the first biaxial shifting device 24G. As a result, in the period from the time t4 to the time t5, the pixel PXg contained in the green image light LG and the pixel PXb contained in the blue image light LB are shifted from the second position P2 toward the third position P3.

When the first rotation angle θ1 of the glass plate 24a of the first biaxial shifting device 24G reaches the negative second angle a2 at the time t5, the control device 30 controls the first actuator 24b of the first biaxial shifting device 24G to thereby hold the first rotation angle θ1 of the glass plate 24a of the first biaxial shifting device 24G at the negative second angle a2 in a period from the time t5 to time t6. Further, when the second rotation angle θ2 of the glass plate 24a of the first biaxial shifting device 24G reaches 0 degree at the time t5, the control device 30 controls the second actuator 24c of the first biaxial shifting device 24G to thereby hold the second rotation angle θ2 of the glass plate 24a of the first biaxial shifting device 24G at 0 degree in the period from the time t5 to the time t6. In the period from the time t5 to the time t6, the control device 30 controls the second biaxial shifting device 24B in substantially the same manner as in the first biaxial shifting device 24G. As a result, in the period from the time t5 to the time t6, the position of the pixel PXg contained in the green image light LG and the position of the pixel PXb contained in the blue image light LB are held at the third position P3.

In a period from the time t6 to time t7, the control device 30 controls the first actuator 24b of the first biaxial shifting device 24G to thereby change the first rotation angle θ1 of the glass plate 24a of the first biaxial shifting device 24G from the negative second angle a2 to 0 degree. Further, in the period from the time t6 to the time t7, the control device 30 controls the second actuator 24c of the first biaxial shifting device 24G to thereby change the second rotation angle θ2 of the glass plate 24a of the first biaxial shifting device 24G from 0 degree to the negative fourth angle b2. In the period from the time t6 to the time t7, the control device 30 controls the second biaxial shifting device 24B in substantially the same manner as in the first biaxial shifting device 24G. As a result, in the period from the time t6 to the time t7, the pixel PXg contained in the green image light LG and the pixel PXb contained in the blue image light LB are shifted from the third position P3 toward the fourth position P4.

When the first rotation angle θ1 of the glass plate 24a of the first biaxial shifting device 24G reaches 0 degree at the time t7, the control device 30 controls the first actuator 24b of the first biaxial shifting device 24G to thereby hold the first rotation angle θ1 of the glass plate 24a of the first biaxial shifting device 24G at 0 degree in a period from the time t7 to time t8. Further, when the second rotation angle θ2 of the glass plate 24a of the first biaxial shifting device 24G reaches the negative fourth angle b2 at the time t7, the control device 30 controls the second actuator 24c of the first biaxial shifting device 24G to thereby hold the second rotation angle θ2 of the glass plate 24a of the first biaxial shifting device 24G at the negative fourth angle b2 in a period from the time t7 to time t8. In the period from the time t7 to the time t8, the control device 30 controls the second biaxial shifting device 24B in substantially the same manner as in the first biaxial shifting device 24G. As a result, in the period from time t7 to time t8, the position of the pixel PXg contained in the green image light LG and the position of the pixel PXb contained in the blue image light LB are set to the fourth position P4.

In the period from the time t0 to the time t1, the control device 30 changes the third rotation angle θ3 of the glass plate 26a of the uniaxial shifting device 26 from the negative sixth angle c2 to the positive fifth angle c1 by controlling the third actuator 26b of the uniaxial shifting device 26. As a result, the pixel PXr contained in the red image light LR is shifted from the third position P3 toward the first position P1.

When the third rotation angle θ3 reaches the positive fifth angle c1 at the time t1, the control device 30 controls the third actuator 26b of the uniaxial shifting device 26 to thereby hold the third rotation angle θ3 of the glass plate 26a of the uniaxial shifting device 26 at the positive fifth angle c1 in the period from the time t1 to the time t4. As a result, in the period from the time t1 to the time t4, the position of the pixel PXr contained in the red image light LR is held at the first position P1.

In the period from the time t4 to the time t5, the control device 30 changes the third rotation angle θ3 of the glass plate 26a of the uniaxial shifting device 26 from the positive fifth angle c1 to the negative sixth angle c2 by controlling the third actuator 26b of the uniaxial shifting device 26. As a result, the pixel PXr contained in the red image light LR is shifted from the first position P1 toward the third position P3.

When the third rotation angle θ3 reaches the negative sixth angle c2 at the time t5, the control device 30 controls the third actuator 26b of the uniaxial shifting device 26 to thereby hold the third rotation angle θ3 of the glass plate 26a of the uniaxial shifting device 26 at the negative sixth angle c2 in the period from the time t5 to the time t8. As a result, in the period from the time t5 to the time t8, the position of the pixel PXr contained in the red image light LR emitted from the uniaxial shifting device 26 is held at the third position P3.

After the time t8, the control device 30 repeats the operations performed in a period from the time t0 to the time t8. For example, in a period from the time t8 to time t9, the control device 30 changes the first rotation angle θ1 of the glass plates 24a of the first biaxial shifting device 24G and the second biaxial shifting device 24B from 0 degree to the positive first angle a1. Further, in the period from the time t8 to the time t9, the control device 30 changes the second rotation angle θ2 of the glass plates 24a of the first biaxial shifting device 24G and the second biaxial shifting device 24B from the negative fourth angle b2 to 0 degree. Further, in the period from the time t8 to the time t9, the control device 30 changes the third rotation angle θ3 of the glass plate 26a of the uniaxial shifting device 26 from the negative sixth angle c2 to the positive fifth angle c1.

In FIG. 9, the period from the time t0 to the time t8 corresponds to one frame of the video signal supplied to the projector according to the second embodiment. A frame rate of the liquid crystal panel 22R is twice the frame rate of the video signal supplied to the projector according to the second embodiment. A frame rate of the liquid crystal panels 22G, 22B is twice the frame rate of the liquid crystal panel 22R. That is, the frame rate of the liquid crystal panels 22G, 22B is four times the frame rate of the video signal.

The control device 30 controls the drive timing of the liquid crystal panels 22G, 22B such that the rotation efficiency Eg of the liquid crystal panel 22G becomes the maximum value Egm and the rotation efficiency Eb of the liquid crystal panel 22B becomes the maximum value Ebm in the periods in which the pixel PXg contained in the green image light LG and the pixel PXb contained in the blue image light LB are located respectively at the first position P1, the second position P2, the third position P3, and the fourth position P4. Since the drive timing of the liquid crystal panels 22G, 22B in the second embodiment is the same as that in the first embodiment, the description thereof will be omitted.

On the other hand, the control device 30 controls the drive timing of the liquid crystal panel 22R such that the rotation efficiency Er of the liquid crystal panel 22R becomes the maximum value Erm in the periods in which the pixel PXr contained in the red image light LR is located respectively at the first position P1 and the third position P3.

In a seventh period from the time t0 to the time t4, the control device 30 applies a voltage corresponding to an image to be displayed at the first position P1 to the liquid crystal layer of the liquid crystal panel 22R. Specifically, in the first half of the seventh period, the control device 30 applies a positive voltage corresponding to the image to be displayed at the first position P1 to the liquid crystal layer of the liquid crystal panel 22R. In the second half of the seventh period, the control device 30 applies a negative voltage corresponding to the image to be displayed at the first position P1 to the liquid crystal layer of the liquid crystal panel 22R.

In an eighth period from the time t4 to the time t8, the control device 30 applies a voltage corresponding to an image to be displayed at the third position P3 to the liquid crystal layer of the liquid crystal panel 22R. Specifically, in the first half of the eighth period, the control device 30 applies a positive voltage corresponding to the image to be displayed at the third position P3 to the liquid crystal layer of the liquid crystal panel 22R. In the second half of the eighth period, the control device 30 applies a negative voltage corresponding to the image to be displayed at the third position P3 to the liquid crystal layer of the liquid crystal panel 22R.

By the control device 30 controlling the drive timing of the liquid crystal panel 22R as described above, the rotation efficiency Er of the liquid crystal panel 22R becomes the maximum value Erm in the periods in which the pixel PXr contained in the red image light LR is located respectively at the first position P1 and the third position P3.

As illustrated in FIG. 9, in the second embodiment, in the periods in which the pixel PXr contained in the red image light LR moves to the next position, such as the period from the time t4 to the time t5, a region where the rotation efficiency Er increases and a region where the rotation efficiency Er decreases in the liquid crystal panel 22R overlap each other. Therefore, similarly to the first embodiment, in these periods, although the red image is not turned off, it is conceivable that significant color breakup in a direction from red toward cyan does not occur.

As described above, in the projector according to the second embodiment, the optical shifting device 50B includes the first biaxial shifting device 24G that shifts the optical path of the green image light LG along the two axes and the uniaxial shifting device 26 that shifts the optical path of the red image light LR along the one axis, the frame rate of the liquid crystal panel 22R is twice the frame rate of the video signal supplied to the projector according to the second embodiment, and the frame rate of the liquid crystal panel 22G is twice the frame rate of the liquid crystal panel 22R.

According to such a second embodiment, when the optical shifting device 50B includes the first biaxial shifting device 24G that shifts the optical path of the green image light LG along the two axes and the uniaxial shifting device 26 that shifts the optical path of the red image light LR along the one axis, it is possible to prevent the deterioration in color and the decrease in brightness from being incurred due to in particular the decrease in the rotation efficiency in the red wavelength band.

The projector according to the second embodiment further includes the liquid crystal panel 22B that modulates the blue fourth colored light L4 to generate the blue image light LB, the dichroic prism 23 combines the red image light LR, the green image light LG, and the blue image light LB to generate the composite image light LC, the optical shifting device 50B further includes the second biaxial shifting device 24B that shifts the optical path of the blue image light LB along the two axes, and the frame rate of the liquid crystal panel 22B is twice the frame rate of the liquid crystal panel 22R.

According to such a second embodiment as described above, when the projector further includes the liquid crystal panel 22B and the optical shifting device 50B further includes the second biaxial shifting device 24B that shifts the optical path of the blue image light LB along the two axes, it is possible to prevent the deterioration in color and the decrease in brightness from being incurred due to in particular the decrease in the rotation efficiency in the red wavelength band while realizing the high definition of the image projected from the projector.

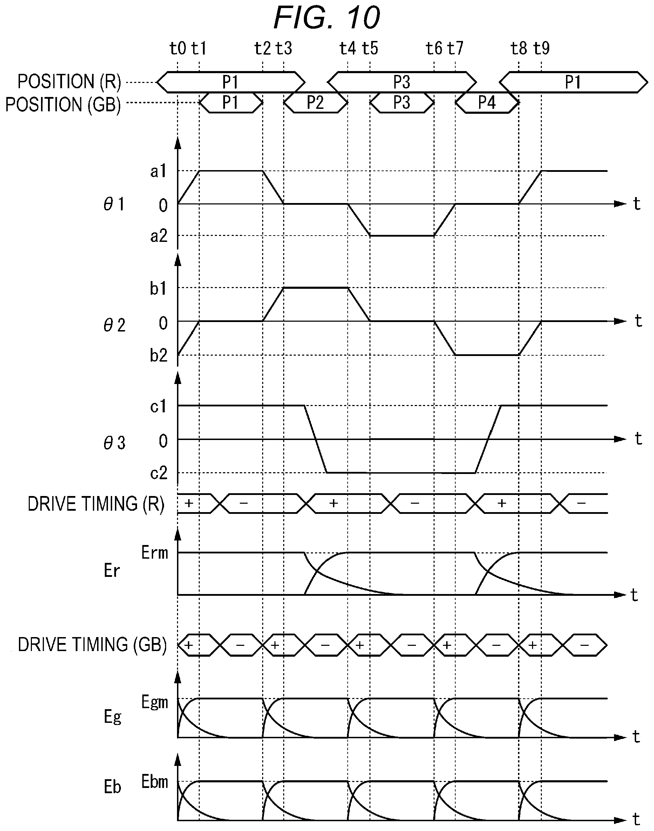

Note that as illustrated in FIG. 10, in the second embodiment, the control device 30 may control the third rotation angle θ3 and the drive timing of the liquid crystal panel 22R such that the central time of the period in which the pixel PXr is held at the first position P1 coincides with the central time of the period in which the pixels PXg, PXb are held at the first position P1. Further, the control device 30 may control the third rotation angle θ3 and the drive timing of the liquid crystal panel 22R such that the central time of the period in which the pixel PXr is held at the third position P3 coincides with the central time of the period in which the pixels PXg and PXb are held at the third position P3.

### Third Embodiment

Then, a third embodiment of the present disclosure will be described.

A projector according to the third embodiment is different from the projector 1 according to the first embodiment in that an optical shifting device 50C different from the optical shifting device 50A described in the first embodiment is provided. Therefore, hereinafter, the third embodiment will be described while focusing on the optical shifting device 50C which is the difference from the first embodiment.

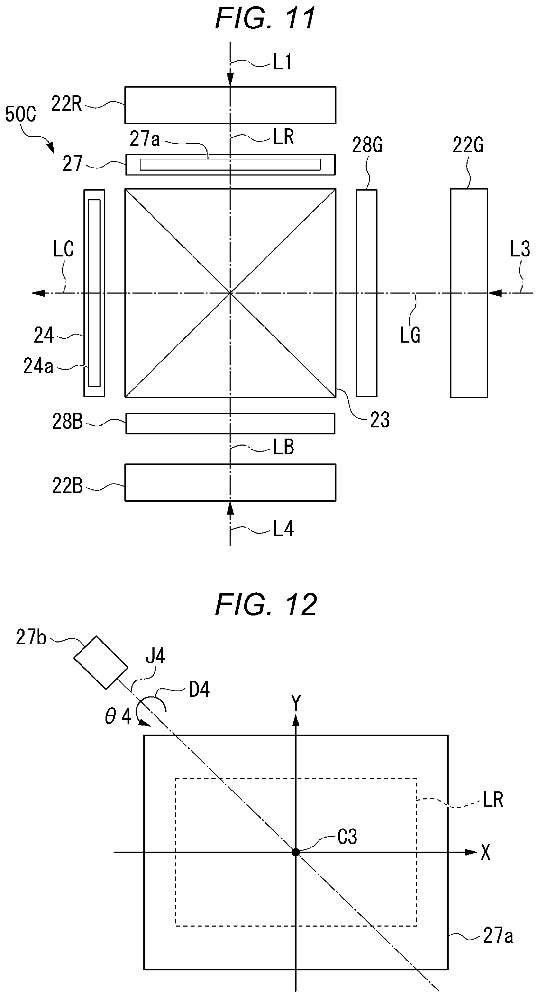

FIG. 11 is a diagram illustrating a configuration of the optical shifting device 50C in the third embodiment. As illustrated in FIG. 11, the optical shifting device 50C includes the biaxial shifting device 24, a uniaxial shifting device 27, a first dummy glass 28G, and a second dummy glass 28B.

The uniaxial shifting device 27 is disposed between the liquid crystal panel 22R and the dichroic prism 23. The uniaxial shifting device 27 shifts the optical path of the red image light LR emitted from the liquid crystal panel 22R along a single axis.

The uniaxial shifting device 27 includes a glass plate 27a which is a light transmissive optical member that transmits the red image light LR. The uniaxial shifting device 27 shifts the optical path of the red image light LR using light refraction by changing the posture of the glass plate 27a. The red image light LR emitted from the liquid crystal panel 22R is incident on the dichroic prism 23 via the uniaxial shifting device 27.

The first dummy glass 28G is disposed between the liquid crystal panel 22G and the dichroic prism 23. The green image light LG emitted from the liquid crystal panel 22G is incident on the dichroic prism 23 via the first dummy glass 28G.

The second dummy glass 28B is disposed between the liquid crystal panel 22B and the dichroic prism 23. The blue image light LB emitted from the liquid crystal panel 22B is incident on the dichroic prism 23 via the second dummy glass 28B.

The dichroic prism 23 combines the red image light LR incident via the uniaxial shifting device 27, the green image light LG incident via the first dummy glass 28G, and the blue image light LB incident via the second dummy glass 28B to generate the composite image light LC.

The biaxial shifting device 24 is disposed between the dichroic prism 23 and the projection optical system 25. The biaxial shifting device 24 shifts the optical path of the composite image light LC emitted from the dichroic prism 23 along the two axes. Since the configuration of the biaxial shifting device 24 is the same as that in the first embodiment, the description thereof will be omitted.

FIG. 12 is a diagram illustrating the glass plate 27a of the uniaxial shifting device 27 viewed from the liquid crystal panel 22R. As illustrated in FIG. 12, the red image light LR emitted from the liquid crystal panel 22R is transmitted through the glass plate 27a. In the uniaxial shifting device 27, the glass plate 27a is disposed to be rotatable around a fourth axis J4. The fourth axis J4 is orthogonal to the central axis C3 of the red image light LR and has an inclination of 45 degrees clockwise with respect to the X axis.

As illustrated in FIG. 12, the uniaxial shifting device 27 includes a fourth actuator 27b that rotates the glass plate 27a around the fourth axis J4. An operation of the fourth actuator 27b is controlled by the control device 30. In the following description, the rotation angle about the fourth axis J4 is referred to as a fourth rotation angle θ4. FIG. 12 shows a state of the glass plate 27a when the fourth rotation angle θ4 is 0 degree. When the fourth rotation angle θ4 is 0 degree, the glass plate 27a is parallel to the X-Y plane and is orthogonal to the central axis C3 of the red image light LR.

In the following description, the state of the glass plate 27a when the fourth rotation angle θ4 is 0 degree is referred to as a reference state. When the glass plate 27a in such a reference state rotates around the fourth axis J4 in the direction indicated by the arrow D4, the fourth rotation angle θ4 has a positive value. On the other hand, when the glass plate 27a in the reference state rotates around the fourth axis J4 in the direction opposite to the direction indicated by the arrow D4, the fourth rotation angle θ4 has a negative value.

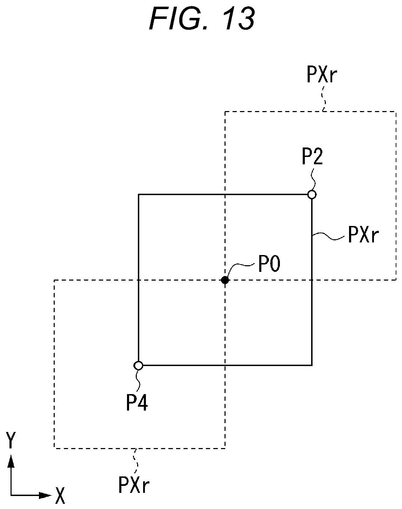

FIG. 13 is a diagram showing how a position on the X-Y plane of the pixel PXr contained in the red image light LR changes in accordance with a rotation of the glass plate 27a. The position of the pixel PXr when the glass plate 27a is in the reference state, that is, when the fourth rotation angle θ4 is 0 degree is defined as a reference position P0 of the pixel PXr. Note that, as an example, the position of the pixel PXr is a position of a center point of the pixel PXr.

When the fourth rotation angle θ4 is a positive seventh angle d1, the position of the pixel PXr is a second position P2 shifted from the reference position P0 to the upper right by a half pixel. When the fourth rotation angle θ4 is a negative eighth angle d2, the position of the pixel PXr is a fourth position P4 shifted from the reference position P0 to the lower left by a half pixel.

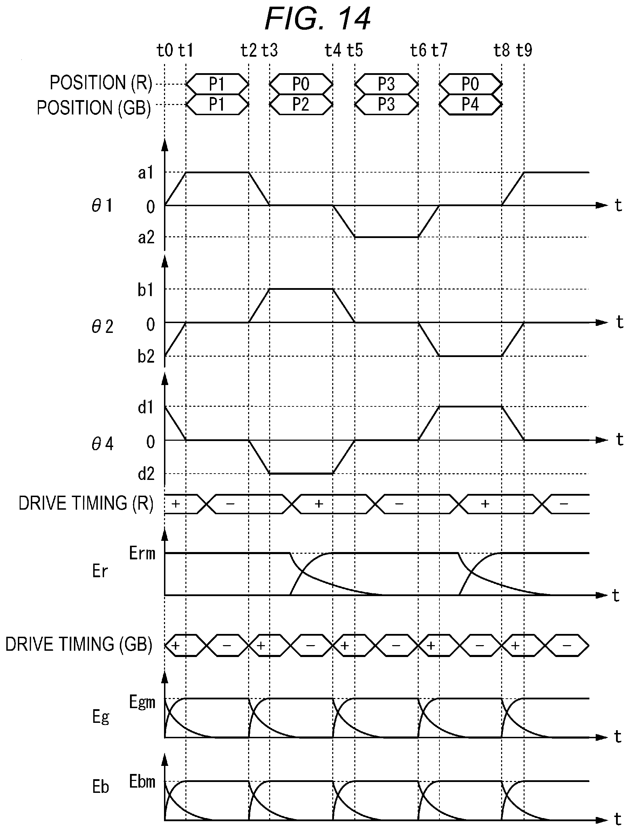

FIG. 14 is a timing chart illustrating a temporal correspondence relationship among the positions of the pixels PXr, PXg, and PXb contained in the composite image light LC, the first rotation angle θ1, the second rotation angle θ2, the fourth rotation angle θ4, the drive timings of the liquid crystal panels 22R, 22G, and 22B, and the rotation efficiency of each of the liquid crystal panels 22R, 22G, and 22B.

In FIG. 14, "POSITION (R)" indicates the position of the pixel PXr contained in the composite image light LC. "POSITION (GB)" indicates the positions of the pixels PXg and PXb contained in the composite image light LC. "DRIVE TIMING (R)" indicates the drive timing of the liquid crystal panel 22R. "DRIVE TIMING (GB)" indicates the drive timing of the liquid crystal panels 22G, 22B. "Er" indicates the rotation efficiency of the liquid crystal panel 22R. "Eg" indicates the rotation efficiency of the liquid crystal panel 22G. "Eb" indicates the rotation efficiency of the liquid crystal panel 22B.

In a period from time t0 to time t1, the control device 30 controls the first actuator 24b of the biaxial shifting device 24 to thereby change the first rotation angle θ1 of the glass plate 24a from 0 degree to the positive first angle a1. In the period from the time t0 to the time t1, the control device 30 controls the second actuator 24c of the biaxial shifting device 24 to thereby change the second rotation angle θ2 of the glass plate 24a from the negative fourth angle b2 to 0 degree. Further, in the period from the time t0 to the time t1, the control device 30 controls the fourth actuator 27b of the uniaxial shifting device 27 to thereby change the fourth rotation angle θ4 of the glass plate 27a from the positive seventh angle d1 to 0 degree.

When the first rotation angle θ1 reaches the positive first angle a1 at the time t1, the control device 30 controls the first actuator 24b of the biaxial shifting device 24 to thereby hold the first rotation angle θ1 at the positive first angle a1 in a period from the time t1 to time t2. When the second rotation angle θ2 reaches 0 degree at the time t1, the control device 30 controls the second actuator 24c of the biaxial shifting device 24 to thereby hold the second rotation angle θ2 at 0 degree in the period from the time t1 to the time t2. Further, when the fourth rotation angle θ4 reaches 0 degree at the time t1, the control device 30 controls the fourth actuator 27b of the uniaxial shifting device 27 to thereby hold the fourth rotation angle θ4 at 0 degree in the period from the time t1 to the time t2. As a result, in the period from the time t1 to the time t2, the positions of the pixels PXr, PXg, and PXb contained in the composite image light LC emitted from the biaxial shifting device 24 are held at the first position P1.

In a period from the time t2 to time t3, the control device 30 changes the first rotation angle θ1 of the glass plate 24a from the positive first angle a1 to 0 degree by controlling the first actuator 24b of the biaxial shifting device 24. Further, in the period from the time t2 to the time t3, the control device 30 controls the second actuator 24c of the biaxial shifting device 24 to thereby change the second rotation angle θ2 of the glass plate 24a from 0 degree to the positive third angle b1. Further, in the period from the time t2 to the time t3, the control device 30 controls the fourth actuator 27b of the uniaxial shifting device 27 to thereby change the fourth rotation angle θ4 of the glass plate 27a from 0 degree to the negative eighth angle d2.

When the first rotation angle θ1 reaches 0 degree at the time t3, the control device 30 controls the first actuator 24b of the biaxial shifting device 24 to thereby hold the first rotation angle θ1 at 0 degree in a period from the time t3 to time t4. Further, when the second rotation angle θ2 reaches the positive third angle b1 at the time t3, the control device 30 controls the second actuator 24c of the biaxial shifting device 24 to thereby hold the second rotation angle θ2 at the positive third angle b1 in the period from the time t3 to the time t4. Further, when the fourth rotation angle θ4 reaches the negative eighth angle d2 at the time t3, the control device 30 holds the fourth rotation angle θ4 at the negative eighth angle d2 in the period from the time t3 to the time t4 by controlling the fourth actuator 27b of the uniaxial shifting device 27. As a result, in the period from the time t3 to the time t4, the positions of the pixels PXg, PXb contained in the composite image light LC emitted from the biaxial shifting device 24 are held at the second position P2. On the other hand, in the period from the time t3 to the time t4, the position of the pixel PXr contained in the composite image light LC emitted from the biaxial shifting device 24 becomes the reference position P0 by the uniaxial shifting device 27 canceling the shift to the second position P2.

In a period from the time t4 to time t5, the control device 30 controls the first actuator 24b of the biaxial shifting device 24 to thereby change the first rotation angle θ1 of the glass plate 24a from 0 degree to the negative second angle a2. Further, in the period from the time t4 to the time t5, the control device 30 controls the second actuator 24c of the biaxial shifting device 24 to thereby change the second rotation angle θ2 of the glass plate 24a from the positive third angle b1 to 0 degree. Further, in the period from the time t4 to the time t5, the control device 30 controls the fourth actuator 27b of the uniaxial shifting device 27 to thereby change the fourth rotation angle θ4 of the glass plate 27a from the negative eighth angle d2 to 0 degree.

When the first rotation angle θ1 reaches the negative second angle a2 at the time t5, the control device 30 holds the first rotation angle θ1 at the negative second angle a2 in a period from the time t5 to time t6 by controlling the first actuator 24b of the biaxial shifting device 24. In addition, when the second rotation angle θ2 reaches 0 degree at the time t5, the control device 30 controls the second actuator 24c of the biaxial shifting device 24 to thereby hold the second rotation angle θ2 at 0 degree in the period from the time t5 to the time t6. Further, when the fourth rotation angle θ4 reaches 0 degree at the time t5, the control device 30 controls the fourth actuator 27b of the uniaxial shifting device 27 to thereby hold the fourth rotation angle θ4 at 0 degree in the period from the time t5 to the time t6. As a result, in the period from the time t5 to the time t6, the positions of the pixels PXr, PXg, and PXb contained in the composite image light LC emitted from the biaxial shifting device 24 are held at the third position P3.

In a period from the time t6 to time t7, the control device 30 changes the first rotation angle θ1 of the glass plate 24a from the negative second angle a2 to 0 degree by controlling the first actuator 24b of the biaxial shifting device 24. Further, in the period from the time t6 to the time t7, the control device 30 controls the second actuator 24c of the biaxial shifting device 24 to thereby change the second rotation angle θ2 of the glass plate 24a from 0 degree to the negative fourth angle b2. Further, in the period from the time t6 to the time t7, the control device 30 controls the fourth actuator 27b of the uniaxial shifting device 27 to thereby change the fourth rotation angle θ4 of the glass plate 27a from 0 degree to the positive seventh angle d1.

When the first rotation angle θ1 reaches 0 degree at the time t7, the control device 30 controls the first actuator 24b of the biaxial shifting device 24 to thereby hold the first rotation angle θ1 at 0 degree in a period from the time t7 to time t8. Further, when the second rotation angle θ2 reaches the negative fourth angle b2 at the time t7, the control device 30 controls the second actuator 24c of the biaxial shifting device 24 to thereby hold the second rotation angle θ2 at the negative fourth angle b2 in the period from the time t7 to the time t8. Further, when the fourth rotation angle θ4 reaches the positive seventh angle d1 at the time t7, the control device 30 holds the fourth rotation angle θ4 at the positive seventh angle d1 in the period from the time t7 to the time t8 by controlling the fourth actuator 27b of the uniaxial shifting device 27. As a result, in the period from the time t7 to the time t8, the positions of the pixels PXg, PXb contained in the composite image light LC emitted from the biaxial shifting device 24 are held at the fourth position P4. On the other hand, in the period from the time t7 to the time t8, the position of the pixel PXr contained in the composite image light LC emitted from the biaxial shifting device 24 becomes the reference position P0 by the uniaxial shifting device 27 canceling the shift to the fourth position P4.

After the time t8, the control device 30 repeats the operations performed in a period from the time t0 to the time t8. For example, in a period from the time t8 to time t9, the control device 30 changes the first rotation angle θ1 of the glass plate 24a of the biaxial shifting device 24 from 0 degree to the positive first angle a1. Further, in the period from the time t8 to the time t9, the control device 30 changes the second rotation angle θ2 of the glass plate 24a of the biaxial shifting device 24 from the negative fourth angle b2 to 0 degree. Further, in the period from the time t8 to the time t9, the control device 30 changes the fourth rotation angle θ4 of the glass plate 27a of the uniaxial shifting device 27 from the positive seventh angle d1 to 0 degree.

In FIG. 14, the period from the time t0 to the time t8 corresponds to one frame of the video signal supplied to the projector according to the third embodiment. A frame rate of the liquid crystal panel 22R is twice the frame rate of the video signal supplied to the projector according to the third embodiment. A frame rate of the liquid crystal panels 22G, 22B is twice the frame rate of the liquid crystal panel 22R. That is, the frame rate of the liquid crystal panels 22G, 22B is four times the frame rate of the video signal.

The control device 30 controls the drive timing of the liquid crystal panels 22G, 22B such that the rotation efficiency Eg of the liquid crystal panel 22G becomes the maximum value Egm and the rotation efficiency Eb of the liquid crystal panel 22B becomes the maximum value Ebm in the periods in which the pixels PXg, PXb contained in the composite image light LC are located respectively at the first position P1, the second position P2, the third position P3, and the fourth position P4. Since the drive timing of the liquid crystal panels 22G, 22B in the third embodiment is the same as that in the first embodiment, the description thereof will be omitted.

On the other hand, the control device 30 controls the drive timing of the liquid crystal panel 22R such that the rotation efficiency Er of the liquid crystal panel 22R becomes the maximum value Erm in the periods in which the pixel PXr contained in the composite image light LC is located respectively at the first position P1 and the third position P3. Since the drive timing of the liquid crystal panel 22R in the third embodiment is the same as that in the first embodiment, the description thereof will be omitted.

As illustrated in FIG. 14, in the periods in which the pixel PXr contained in the composite image light LC is located at the reference position P0, a region where the rotation efficiency Er increases and a region where the rotation efficiency Er decreases in the liquid crystal panel 22R overlap each other. Therefore, in the period in which the pixel PXr contained in the composite image light LC is located at the reference position P0, although the red image is not turned off, it is conceivable that significant color breakup in a direction from red toward cyan does not occur.

As described above, in the projector according to the third embodiment, the optical shifting device 50C includes the biaxial shifting device 24 that shifts the optical path of the composite image light LC along the two axes and the uniaxial shifting device 27 that shifts the optical path of the red image light LR along the one axis, the frame rate of the liquid crystal panel 22R is twice the frame rate of the video signal supplied to the projector according to the third embodiment, and the frame rate of the liquid crystal panel 22G is twice the frame rate of the liquid crystal panel 22R.

According to such a third embodiment, when the optical shifting device 50C includes the biaxial shifting device 24 that shifts the optical path of the composite image light LC along the two axes and the uniaxial shifting device 27 that shifts the optical path of the red image light LR along the one axis, it is possible to prevent the deterioration in color and the decrease in brightness from being incurred due to in particular the decrease in the rotation efficiency in the red wavelength band.

The projector according to the third embodiment further includes the liquid crystal panel 22B that modulates the blue fourth colored light L4 to generate the blue image light LB, the dichroic prism 23 combines the red image light LR, the green image light LG, and the blue image light LB to generate the composite image light LC, and the frame rate of the liquid crystal panel 22B is twice the frame rate of the liquid crystal panel 22R.

According to such a third embodiment as described above, when the projector further includes the liquid crystal panel 22B, it is possible to prevent the deterioration in color and the decrease in brightness from being incurred due to in particular the decrease in the rotation efficiency in the red wavelength band while realizing the high definition of the image projected from the projector.

### Fourth Embodiment

Then, a fourth embodiment of the present disclosure will be described.

A projector according to the fourth embodiment is different from the projector 1 according to the first embodiment in that an optical shifting device 50D different from the optical shifting device 50A described in the first embodiment is provided. Therefore, hereinafter, the fourth embodiment will be described while focusing on the optical shifting device 50D which is the difference from the first embodiment.

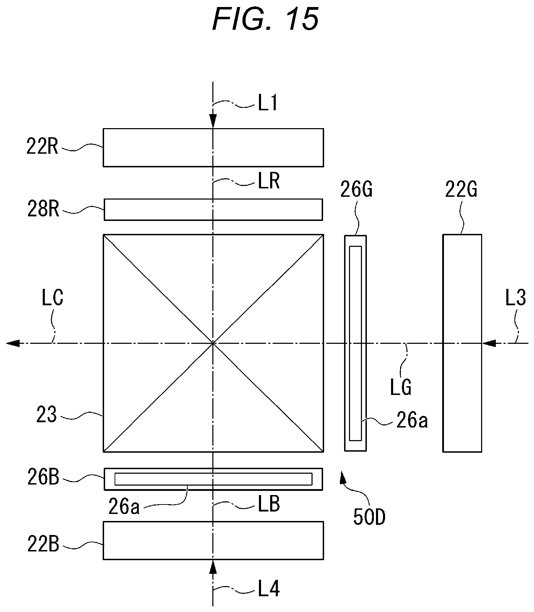

FIG. 15 is a diagram illustrating a configuration of the optical shifting device 50D in the fourth embodiment. As illustrated in FIG. 15, the optical shifting device 50D includes a first uniaxial shifting device 26G, a second uniaxial shifting device 26B, and a third dummy glass 28R.

The third dummy glass 28R is disposed between the liquid crystal panel 22R and the dichroic prism 23. The red image light LR emitted from the liquid crystal panel 22R is incident on the dichroic prism 23 via the third dummy glass 28R.

The first uniaxial shifting device 26G is disposed between the liquid crystal panel 22G and the dichroic prism 23. The first uniaxial shifting device 26G shifts the optical path of the green image light LG emitted from the liquid crystal panel 22G along one axis.

The first uniaxial shifting device 26G includes a glass plate 26a which is a light transmissive optical member that transmits the green image light LG. The first uniaxial shifting device 26G shifts the optical path of the green image light LG using light refraction by changing the posture of the glass plate 26a. The green image light LG emitted from the liquid crystal panel 22G is incident on the dichroic prism 23 via the first uniaxial shifting device 26G. Since a configuration of the first uniaxial shifting device 26G is the same as that of the uniaxial shifting device 26 described in the second embodiment, the description thereof will be omitted.

The second uniaxial shifting device 26B is disposed between the liquid crystal panel 22B and the dichroic prism 23. The second uniaxial shifting device 26B shifts the optical path of the blue image light LB emitted from the liquid crystal panel 22B along one axis.

The second uniaxial shifting device 26B includes a glass plate 26a which is a light transmissive optical member that transmits the blue image light LB. The second uniaxial shifting device 26B shifts the optical path of the blue image light LB using light refraction by changing the posture of the glass plate 26a. The blue image light LB emitted from the liquid crystal panel 22B is incident on the dichroic prism 23 via the second uniaxial shifting device 26B. Since a configuration of the second uniaxial shifting device 26B is the same as that of the uniaxial shifting device 26 described in the second embodiment, the description thereof will be omitted.

The dichroic prism 23 combines the red image light LR incident via the third dummy glass 28R, the green image light LG incident via the first uniaxial shifting device 26G, and the blue image light LB incident via the second uniaxial shifting device 26B to generate the composite image light LC.

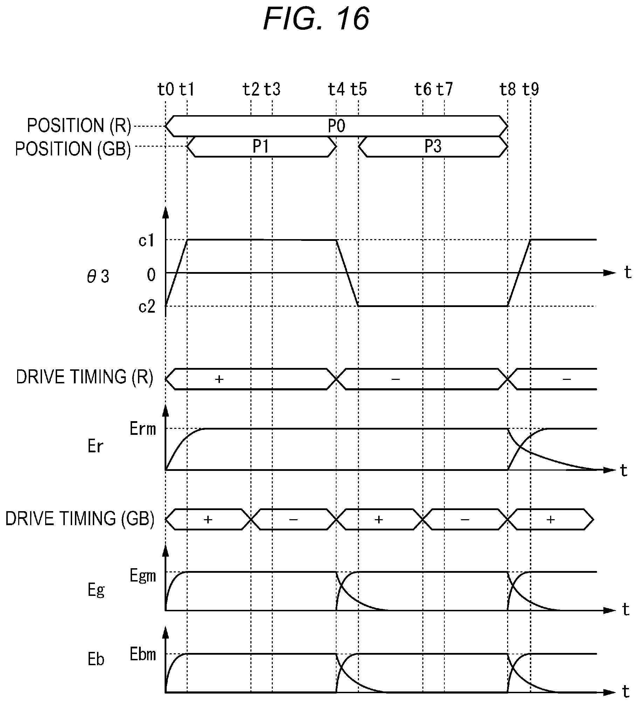

FIG. 16 is a timing chart illustrating a temporal correspondence relationship among the positions of the pixels PXr, PXg, and PXb contained in the composite image light LC, the third rotation angle θ3, the drive timings of the liquid crystal panels 22R, 22G, and 22B, and the rotation efficiency of each of the liquid crystal panels 22R, 22G, and 22B.

In FIG. 16, "POSITION (R)" indicates the position of the pixel PXr contained in the composite image light LC. "POSITION (GB)" indicates the positions of the pixels PXg and PXb contained in the composite image light LC. "DRIVE TIMING (R)" indicates the drive timing of the liquid crystal panel 22R. "DRIVE TIMING (GB)" indicates the drive timing of the liquid crystal panels 22G, 22B. "Er" indicates the rotation efficiency of the liquid crystal panel 22R. "Eg" indicates the rotation efficiency of the liquid crystal panel 22G. "Eb" indicates the rotation efficiency of the liquid crystal panel 22B.

In a period from time t0 to time t1, the control device 30 controls the third actuators 26b of the first uniaxial shifting device 26G and the second uniaxial shifting device 26B to thereby change the third rotation angles θ3 of the glass plates 26a of the first uniaxial shifting device 26G and the second uniaxial shifting device 26B from the negative sixth angle c2 to the positive fifth angle c1. As a result, in the period from the time t0 to the time t1, the pixels PXg, PXb contained in the composite image light LC are shifted from the third position P3 toward the first position P1.

When the third rotation angles θ3 reach the positive fifth angle c1 at the time t1, the control device 30 controls the third actuators 26b of the first uniaxial shifting device 26G and the second uniaxial shifting device 26B to thereby hold the third rotation angles θ3 of the glass plates 26a of the first uniaxial shifting device 26G and the second uniaxial shifting device 26B at the positive fifth angle c1 in a period from the time t1 to time t4. As a result, in the period from the time t1 to the time t4, the positions of the pixels PXg, PXb contained in the composite image light LC are held at the first position P1.

In a period from the time t4 to time t5, the control device 30 controls the third actuators 26b of the first uniaxial shifting device 26G and the second uniaxial shifting device 26B to thereby change the third rotation angles θ3 of the glass plates 26a of the first uniaxial shifting device 26G and the second uniaxial shifting device 26B from the positive fifth angle c1 to the negative sixth angle c2. As a result, in the period from the time t4 to the time t5, the pixels PXg, PXb contained in the composite image light LC are shifted from the first position P1 toward the third position P3.

When the third rotation angles θ3 reach the negative sixth angle c2 at the time t5, the control device 30 controls the third actuators 26b of the first uniaxial shifting device 26G and the second uniaxial shifting device 26B to thereby hold the third rotation angles θ3 of the glass plates 26a of the first uniaxial shifting device 26G and the second uniaxial shifting device 26B at the negative sixth angle c2 in a period from the time t5 to time t8. As a result, in the period from the time t5 to the time t8, the positions of the pixels PXg, PXb contained in the composite image light LC are held at the third position P3.

In the present embodiment, since the optical path of the red image light LR emitted from the liquid crystal panel 22R is not shifted, the position of the pixel PXr contained in the composite image light LC is the reference position P0 in the period of all the frames including the period from the time t0 to the time t8.

In FIG. 16, the period from the time t0 to the time t8 corresponds to one frame of the video signal supplied to the projector according to the fourth embodiment. A frame rate of the liquid crystal panel 22R is the same as the frame rate of the video signal supplied to the projector according to the fourth embodiment. A frame rate of the liquid crystal panels 22G, 22B is twice the frame rate of the liquid crystal panel 22R. That is, the frame rate of the liquid crystal panels 22G, 22B is twice the frame rate of the video signal.

The control device 30 controls the drive timing of the liquid crystal panels 22G, 22B such that the rotation efficiency Eg of the liquid crystal panel 22G becomes the maximum value Egm and the rotation efficiency Eb of the liquid crystal panel 22B becomes the maximum value Ebm in the periods in which the pixels PXg, PXb contained in the composite image light LC are located respectively at the first position P1 and the third position P3.

In a ninth period from the time t0 to the time t4, the control device 30 applies a voltage corresponding to an image to be displayed at the first position P1 to the liquid crystal layers of the liquid crystal panels 22G, 22B. Specifically, in the first half of the ninth period, the control device 30 applies a positive voltage corresponding to the image to be displayed at the first position P1 to the liquid crystal layers of the liquid crystal panels 22G, 22B. In the second half of the ninth period, the control device 30 applies a negative voltage corresponding to the image to be displayed at the first position P1 to the liquid crystal layers of the liquid crystal panels 22G, 22B.

In a tenth period from the time t4 to the time t8, the control device 30 applies a voltage corresponding to an image to be displayed at the third position P3 to the liquid crystal layers of the liquid crystal panels 22G, 22B. Specifically, in the first half of the tenth period, the control device 30 applies a positive voltage corresponding to the image to be displayed at the third position P3 to the liquid crystal layers of the liquid crystal panels 22G, 22B. In the second half of the tenth period, the control device 30 applies a negative voltage corresponding to the image to be displayed at the third position P3 to the liquid crystal layers of the liquid crystal panels 22G, 22B.

By the control device 30 controlling the drive timing of the liquid crystal panels 22G, 22B as described above, the rotation efficiency Eg of the liquid crystal panel 22G becomes the maximum value Egm and the rotation efficiency Eb of the liquid crystal panel 22B becomes the maximum value Ebm in the periods in which the pixels PXg, PXb contained in the composite image light LC are located respectively at the first position P1 and the third position P3.

On the other hand, the control device 30 controls the drive timing of the liquid crystal panel 22R so that the rotation efficiency Er of the liquid crystal panel 22R becomes the maximum value Erm in the period of one frame. For example, in one frame from the time t0 to the time t8, the control device 30 applies a voltage corresponding to an image to be displayed at the reference position P0 to the liquid crystal layer of the liquid crystal panel 22R. Specifically, in the first half of one frame, the control device 30 applies a positive voltage corresponding to the image to be displayed at the reference position P0 to the liquid crystal layer of the liquid crystal panel 22R. In the second half of the one frame, the control device 30 applies a negative voltage corresponding to the image to be displayed at the reference position P0 to the liquid crystal layer of the liquid crystal panel 22R.

As described above, in the projector according to the fourth embodiment, the optical shifting device 50D includes the first uniaxial shifting device 26G that shifts the optical path of the green image light LG along the one axis, the frame rate of the liquid crystal panel 22R is the same as the frame rate of the video signal supplied to the projector according to the fourth embodiment, and the frame rate of the liquid crystal panel 22G is twice the frame rate of the liquid crystal panel 22R.

According to such a fourth embodiment, when the optical shifting device 50D includes the first uniaxial shifting device 26G that shifts the optical path of the green image light LG along the one axis, it is possible to prevent the deterioration in color and the decrease in brightness from being incurred due to in particular the decrease in the rotation efficiency in the red wavelength band.

The projector according to the fourth embodiment further includes the liquid crystal panel 22B that modulates the blue fourth colored light L4 to generate the blue image light LB, the dichroic prism 23 combines the red image light LR, the green image light LG, and the blue image light LB to generate the composite image light LC, the optical shifting device 50D further includes the second uniaxial shifting device 26B that shifts the optical path of the blue image light LB along the one axis, and the frame rate of the liquid crystal panel 22B is twice the frame rate of the liquid crystal panel 22R.

According to such a fourth embodiment as described above, when the projector further includes the liquid crystal panel 22B and the optical shifting device 50D further includes the second uniaxial shifting device 26B that shifts the optical path of the blue image light LB along the one axis, it is possible to prevent the deterioration in color and the decrease in brightness from being incurred due to in particular the decrease in the rotation efficiency in the red wavelength band while realizing the high definition of the image projected from the projector.

### Fifth Embodiment

Then, a fifth embodiment of the present disclosure will be described.

A projector according to the fifth embodiment is different from the projector 1 according to the first embodiment in that an optical shifting device 50E different from the optical shifting device 50A described in the first embodiment is provided. Therefore, hereinafter, the fifth embodiment will be described while focusing on the optical shifting device 50E which is the difference from the first embodiment.

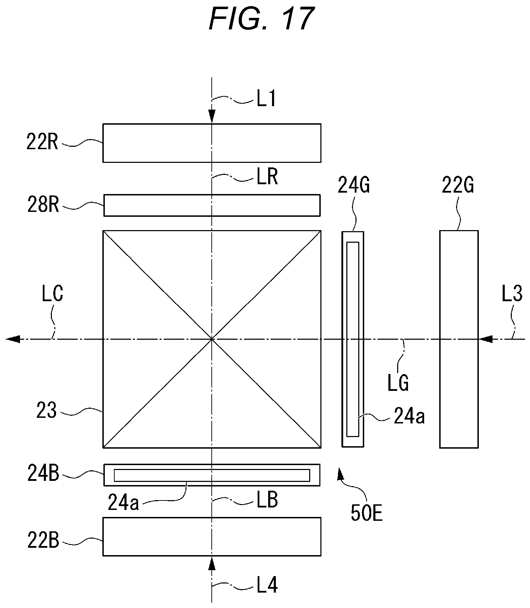

FIG. 17 is a diagram illustrating a configuration of the optical shifting device 50E in the fifth embodiment. As illustrated in FIG. 17, the optical shifting device 50E includes the first biaxial shifting device 24G, the second biaxial shifting device 24B, and the third dummy glass 28R.

The third dummy glass 28R is disposed between the liquid crystal panel 22R and the dichroic prism 23. The red image light LR emitted from the liquid crystal panel 22R is incident on the dichroic prism 23 via the third dummy glass 28R.

The first biaxial shifting device 24G is disposed between the liquid crystal panel 22G and the dichroic prism 23. The first biaxial shifting device 24G shifts the optical path of the green image light LG emitted from the liquid crystal panel 22G along two axes.

The first biaxial shifting device 24G includes a glass plate 24a which is a light transmissive optical member that transmits the green image light LG. The first biaxial shifting device 24G shifts the optical path of the green image light LG using light refraction by changing the posture of the glass plate 24a. The green image light LG emitted from the liquid crystal panel 22G is incident on the dichroic prism 23 via the first biaxial shifting device 24G. Since the configuration of the first biaxial shifting device 24G is the same as that of the biaxial shifting device 24 described in the first embodiment, the description thereof will be omitted.

The second biaxial shifting device 24B is disposed between the liquid crystal panel 22B and the dichroic prism 23. The second biaxial shifting device 24B shifts the optical path of the blue image light LB emitted from the liquid crystal panel 22B along two axes.

The second biaxial shifting device 24B includes a glass plate 24a which is a light transmissive optical member that transmits the blue image light LB. The second biaxial shifting device 24B shifts the optical path of the blue image light LB using light refraction by changing the posture of the glass plate 24a. The blue image light LB emitted from the liquid crystal panel 22B is incident on the dichroic prism 23 via the second biaxial shifting device 24B. Since the configuration of the second biaxial shifting device 24B is the same as that of the biaxial shifting device 24 described in the first embodiment, the description thereof will be omitted.

The dichroic prism 23 combines the red image light LR incident via the third dummy glass 28R, the green image light LG incident via the first biaxial shifting device 24G, and the blue image light LB incident via the second biaxial shifting device 24B to generate the composite image light LC.

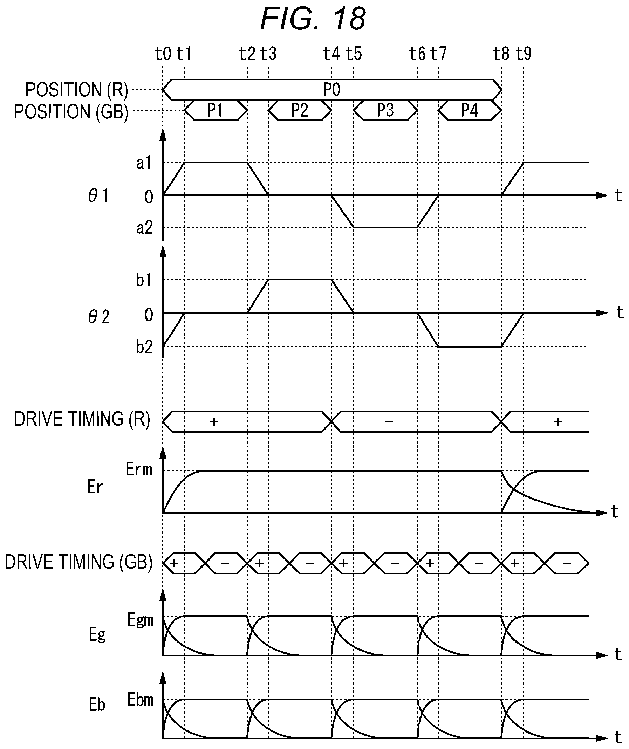

FIG. 18 is a timing chart illustrating a temporal correspondence relationship among the positions of the pixels PXr, PXg, and PXb contained in the composite image light LC, the first rotation angle θ1, the second rotation angle θ2, the drive timings of the liquid crystal panels 22R, 22G, and 22B, and the rotation efficiency of each of the liquid crystal panels 22R, 22G, and 22B.

In FIG. 18, "POSITION (R)" indicates the position of the pixel PXr contained in the composite image light LC. "POSITION (GB)" indicates the positions of the pixels PXg and PXb contained in the composite image light LC. "DRIVE TIMING (R)" indicates the drive timing of the liquid crystal panel 22R. "DRIVE TIMING (GB)" indicates the drive timing of the liquid crystal panels 22G, 22B. "Er" indicates the rotation efficiency of the liquid crystal panel 22R. "Eg" indicates the rotation efficiency of the liquid crystal panel 22G. "Eb" indicates the rotation efficiency of the liquid crystal panel 22B.

In a period from time t0 to time t1, the control device 30 controls the first actuators 24b of the first biaxial shifting device 24G and the second biaxial shifting device 24B to thereby change the first rotation angles θ1 of the glass plates 24a of the first biaxial shifting device 24G and the second biaxial shifting device 24B from 0 degree to the positive first angle a1. Further, in the period from the time t0 to the time t1, the control device 30 controls the second actuators 24c of the first biaxial shifting device 24G and the second biaxial shifting device 24B to thereby change the second rotation angles θ2 of the glass plates 24a of the first biaxial shifting device 24G and the second biaxial shifting device 24B from the negative fourth angle b2 to 0 degree. As a result, in the period from the time t0 to the time t1, the pixels PXg, PXb contained in the composite image light LC are shifted from the fourth position P4 toward the first position P1.

When the first rotation angles θ1 reach the positive first angle a1 at the time t1, the control device 30 controls the first actuators 24b of the first biaxial shifting device 24G and the second biaxial shifting device 24B to thereby hold the first rotation angles θ1 of the glass plates 24a of the first biaxial shifting device 24G and the second biaxial shifting device 24B at the positive first angle a1 in a period from the time t1 to time t2. In addition, when the second rotation angles θ2 reach 0 degree at the time t1, the control device 30 controls the second actuators 24c of the first biaxial shifting device 24G and the second biaxial shifting device 24B to thereby hold the second rotation angles θ2 of the glass plates 24a of the first biaxial shifting device 24G and the second biaxial shifting device 24B at 0 degree in the period from the time t1 to the time t2. As a result, in the period from the time t1 to the time t2, the positions of the pixels PXg, PXb contained in the composite image light LC are held at the first position P1.

In a period from the time t2 to time t3, the control device 30 controls the first actuators 24b of the first biaxial shifting device 24G and the second biaxial shifting device 24B to thereby change the first rotation angles θ1 of the glass plates 24a of the first biaxial shifting device 24G and the second biaxial shifting device 24B from the positive first angle a1 to 0 degree. Further, in the period from the time t2 to the time t3, the control device 30 controls the second actuators 24c of the first biaxial shifting device 24G and the second biaxial shifting device 24B to thereby change the second rotation angles θ2 of the glass plates 24a of the first biaxial shifting device 24G and the second biaxial shifting device 24B from 0 degree to the positive third angle b1. As a result, in the period from the time t2 to the time t3, the pixels PXg, PXb contained in the composite image light LC are shifted from the first position P1 toward the second position P2.

When the first rotation angles θ1 reach 0 degree at the time t3, the control device 30 controls the first actuators 24b of the first biaxial shifting device 24G and the second biaxial shifting device 24B to thereby hold the first rotation angles θ1 of the glass plates 24a of the first biaxial shifting device 24G and the second biaxial shifting device 24B at 0 degree in a period from the time t3 to time t4. Further, when the second rotation angles θ2 reach the positive third angle b1 at the time t3, the control device 30 controls the second actuators 24c of the first biaxial shifting device 24G and the second biaxial shifting device 24B to thereby hold the second rotation angles θ2 of the glass plates 24a of the first biaxial shifting device 24G and the second biaxial shifting device 24B at the positive third angle b1 in the period from the time t3 to the time t4. As a result, in the period from the time t3 to the time t4, the positions of the pixels PXg, PXb contained in the composite image light LC are held at the second position P2.

In a period from the time t4 to time t5, the control device 30 controls the first actuators 24b of the first biaxial shifting device 24G and the second biaxial shifting device 24B to thereby change the first rotation angles θ1 of the glass plates 24a of the first biaxial shifting device 24G and the second biaxial shifting device 24B from 0 degree to the negative second angle a2. Further, in the period from the time t4 to the time t5, the control device 30 controls the second actuators 24c of the first biaxial shifting device 24G and the second biaxial shifting device 24B to thereby change the second rotation angles θ2 of the glass plates 24a of the first biaxial shifting device 24G and the second biaxial shifting device 24B from the positive third angle b1 to 0 degree. As a result, in the period from the time t4 to the time t5, the pixels PXg, PXb contained in the composite image light LC are shifted from the second position P2 toward the third position P3.

When the first rotation angles θ1 reach the negative second angle a2 at the time t5, the control device 30 controls the first actuators 24b of the first biaxial shifting device 24G and the second biaxial shifting device 24B to thereby hold the first rotation angles θ1 of the glass plates 24a of the first biaxial shifting device 24G and the second biaxial shifting device 24B at the negative second angle a2 in a period from the time t5 to time t6. Further, when the second rotation angles θ2 reach 0 degree at the time t5, the control device 30 controls the second actuators 24c of the first biaxial shifting device 24G and the second biaxial shifting device 24B to thereby hold the second rotation angles θ2 of the glass plates 24a of the first biaxial shifting device 24G and the second biaxial shifting device 24B at 0 degree in the period from the time t5 to the time t6. As a result, in the period from the time t5 to the time t6, the positions of the pixels PXg, PXb contained in the composite image light LC are held at the third position P3.

In a period from the time t6 to time t7, the control device 30 controls the first actuators 24b of the first biaxial shifting device 24G and the second biaxial shifting device 24B to thereby change the first rotation angles θ1 of the glass plates 24a of the first biaxial shifting device 24G and the second biaxial shifting device 24B from the negative second angle a2 to 0 degree. Further, in the period from the time t6 to the time t7, the control device 30 controls the second actuators 24c of the first biaxial shifting device 24G and the second biaxial shifting device 24B to thereby change the second rotation angles θ2 of the glass plates 24a of the first biaxial shifting device 24G and the second biaxial shifting device 24B from 0 degree to the negative fourth angle b2. As a result, in the period from the time t6 to the time t7, the pixels PXg, PXb contained in the composite image light LC are shifted from the third position P3 toward the fourth position P4.

When the first rotation angles θ1 reach 0 degree at the time t7, the control device 30 controls the first actuators 24b of the first biaxial shifting device 24G and the second biaxial shifting device 24B to thereby hold the first rotation angles θ1 of the glass plates 24a of the first biaxial shifting device 24G and the second biaxial shifting device 24B at 0 degree in a period from the time t7 to time t8. Further, when the second rotation angles θ2 reach the negative fourth angle b2 at the time t7, the control device 30 controls the second actuators 24c of the first biaxial shifting device 24G and the second biaxial shifting device 24B to thereby hold the second rotation angles θ2 of the glass plates 24a of the first biaxial shifting device 24G and the second biaxial shifting device 24B at the negative fourth angle b2 in the period from the time t7 to the time t8. As a result, in the period from the time t7 to the time t8, the positions of the pixels PXg, PXb contained in the composite image light LC are held at the fourth position P4.

In the present embodiment, since the optical path of the red image light LR emitted from the liquid crystal panel 22R is not shifted, the position of the pixel PXr contained in the composite image light LC is the reference position P0 in the period of all the frames including the period from the time t0 to the time t8.

In FIG. 18, the period from the time t0 to the time t8 corresponds to one frame of the video signal supplied to the projector according to the fifth embodiment. A frame rate of the liquid crystal panel 22R is the same as the frame rate of the video signal supplied to the projector according to the fifth embodiment. The frame rate of the liquid crystal panels 22G, 22B is four times the frame rate of the liquid crystal panel 22R. That is, the frame rate of the liquid crystal panels 22G, 22B is four times the frame rate of the video signal.

The control device 30 controls the drive timing of the liquid crystal panels 22G, 22B such that the rotation efficiency Eg of the liquid crystal panel 22G becomes the maximum value Egm and the rotation efficiency Eb of the liquid crystal panel 22B becomes the maximum value Ebm in the periods in which the pixels PXg, PXb contained in the composite image light LC are located respectively at the first position P1, the second position P2, the third position P3, and the fourth position P4. Since the drive timing of the liquid crystal panels 22G, 22B in the fifth embodiment is the same as that in the first embodiment, the description thereof will be omitted.

On the other hand, the control device 30 controls the drive timing of the liquid crystal panel 22R so that the rotation efficiency Er of the liquid crystal panel 22R becomes the maximum value Erm in the period of one frame. Since the drive timing of the liquid crystal panel 22R in the fifth embodiment is the same as that in the fourth embodiment, the description thereof will be omitted.

As described above, in the projector according to the fifth embodiment, the optical shifting device 50E includes the first biaxial shifting device 24G that shifts the optical path of the green image light LG along the two axes, the frame rate of the liquid crystal panel 22R is the same as the frame rate of the video signal supplied to the projector according to the fifth embodiment, and the frame rate of the liquid crystal panel 22G is four times the frame rate of the liquid crystal panel 22R.

According to such a fifth embodiment, when the optical shifting device 50E includes the first biaxial shifting device 24G that shifts the optical path of the green image light LG along the two axes, it is possible to prevent the deterioration in color and the decrease in brightness from being incurred due to in particular the decrease in the rotation efficiency in the red wavelength band.

The projector according to the fifth embodiment further includes the liquid crystal panel 22B that modulates the blue fourth colored light L4 to generate the blue image light LB, the dichroic prism 23 combines the red image light LR, the green image light LG, and the blue image light LB to generate the composite image light LC, the optical shifting device 50E further includes the second biaxial shifting device 24B that shifts the optical path of the blue image light LB along the two axes, and the frame rate of the liquid crystal panel 22B is four times the frame rate of the liquid crystal panel 22R.

According to such a fifth embodiment as described above, when the projector further includes the liquid crystal panel 22B and the optical shifting device 50E further includes the second biaxial shifting device 24B that shifts the optical path of the blue image light LB along the two axes, it is possible to prevent the deterioration in color and the decrease in brightness from being incurred due to in particular the decrease in the rotation efficiency in the red wavelength band while realizing the high definition of the image projected from the projector.

### Sixth Embodiment

A sixth embodiment of the present disclosure will next be described.

A projector according to the sixth embodiment is different from the projector 1 according to the first embodiment in that an optical shifting device 50F different from the optical shifting device 50A described in the first embodiment is provided. Therefore, hereinafter, the sixth embodiment will be described while focusing on the optical shifting device 50F which is the difference from the first embodiment.

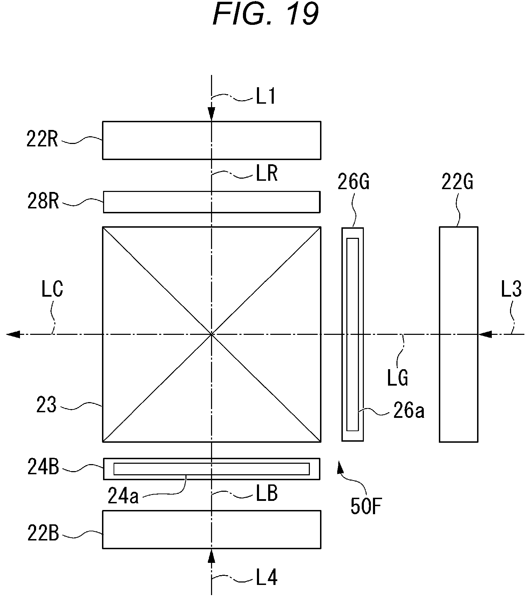

FIG. 19 is a diagram illustrating a configuration of an optical shifting device 50F in the sixth embodiment. As illustrated in FIG. 19, the optical shifting device 50F includes the first uniaxial shifting device 26G, the second biaxial shifting device 24B, and the third dummy glass 28R.

The third dummy glass 28R is disposed between the liquid crystal panel 22R and the dichroic prism 23. The red image light LR emitted from the liquid crystal panel 22R is incident on the dichroic prism 23 via the third dummy glass 28R.

The first uniaxial shifting device 26G is disposed between the liquid crystal panel 22G and the dichroic prism 23. The first uniaxial shifting device 26G shifts the optical path of the green image light LG emitted from the liquid crystal panel 22G along one axis.

The first uniaxial shifting device 26G includes a glass plate 26a which is a light transmissive optical member that transmits the green image light LG. The first uniaxial shifting device 26G shifts the optical path of the green image light LG using light refraction by changing the posture of the glass plate 26a. The green image light LG emitted from the liquid crystal panel 22G is incident on the dichroic prism 23 via the first uniaxial shifting device 26G. Since a configuration of the first uniaxial shifting device 26G is the same as that of the uniaxial shifting device 26 described in the second embodiment, the description thereof will be omitted.

The second biaxial shifting device 24B is disposed between the liquid crystal panel 22B and the dichroic prism 23. The second biaxial shifting device 24B shifts the optical path of the blue image light LB emitted from the liquid crystal panel 22B along two axes.

The second biaxial shifting device 24B includes a glass plate 24a which is a light transmissive optical member that transmits the blue image light LB. The second biaxial shifting device 24B shifts the optical path of the blue image light LB using light refraction by changing the posture of the glass plate 24a. The blue image light LB emitted from the liquid crystal panel 22B is incident on the dichroic prism 23 via the second biaxial shifting device 24B. Since the configuration of the second biaxial shifting device 24B is the same as that of the biaxial shifting device 24 described in the first embodiment, the description thereof will be omitted.

The dichroic prism 23 combines the red image light LR incident via the third dummy glass 28R, the green image light LG incident via the first uniaxial shifting device 26G, and the blue image light LB incident via the second biaxial shifting device 24B to generate the composite image light LC.

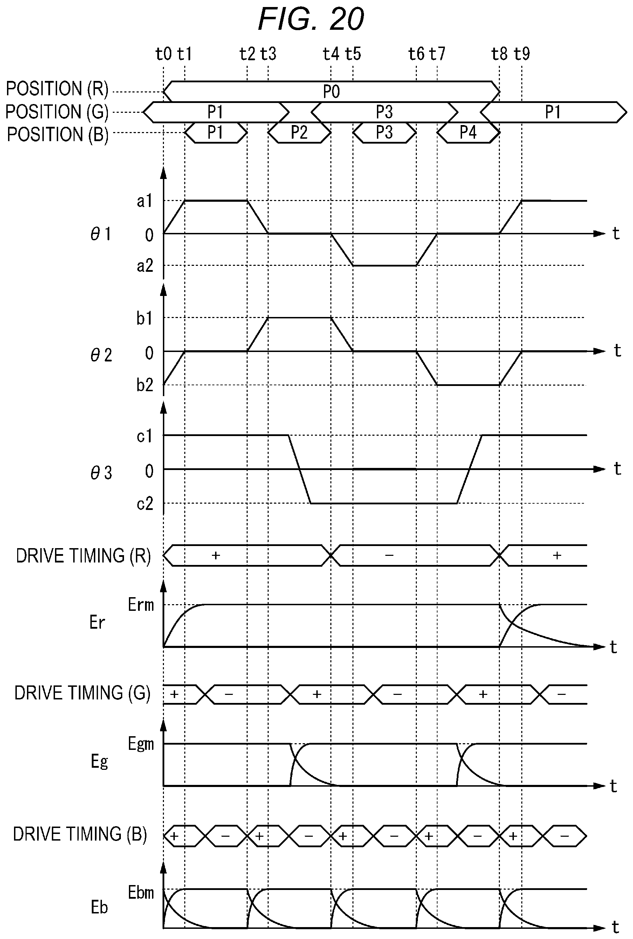

FIG. 20 is a timing chart illustrating a temporal correspondence relationship among the positions of the pixels PXr, PXg, and PXb contained in the composite image light LC, the first rotation angle θ1, the second rotation angle θ2, the third rotation angle θ3, the drive timings of the liquid crystal panels 22R, 22G, and 22B, and the rotation efficiency of each of the liquid crystal panels 22R, 22G, and 22B.

In FIG. 20, "POSITION (R)" indicates the position of the pixel PXr contained in the composite image light LC. "POSITION (G)" indicates the position of the pixel PXg contained in the composite image light LC. "POSITION (B)" indicates the position of the pixel PXb contained in the composite image light LC. "DRIVE TIMING (R)" indicates the drive timing of the liquid crystal panel 22R. "DRIVE TIMING (G)" indicates the drive timing of the liquid crystal panel 22G. "DRIVE TIMING (B)" indicates the drive timing of the liquid crystal panel 22B. "Er" indicates the rotation efficiency of the liquid crystal panel 22R. "Eg" indicates the rotation efficiency of the liquid crystal panel 22G. "Eb" indicates the rotation efficiency of the liquid crystal panel 22B.

In a period from time t0 to time t1, the control device 30 controls the first actuator 24b of the second biaxial shifting device 24B to thereby change the first rotation angle θ1 of the glass plate 24a of the second biaxial shifting device 24B from 0 degree to the positive first angle a1. In the period from the time t0 to the time t1, the control device 30 controls the second actuator 24c of the second biaxial shifting device 24B to thereby change the second rotation angle θ2 of the glass plate 24a of the second biaxial shifting device 24B from the negative fourth angle b2 to 0 degree. As a result, in the period from the time t0 to the time t1, the pixel PXb contained in the composite image light LC is shifted from the fourth position P4 toward the first position P1.

When the first rotation angle θ1 reaches the positive first angle a1 at the time t1, the control device 30 controls the first actuator 24b of the second biaxial shifting device 24B to thereby hold the first rotation angle θ1 of the glass plate 24a of the second biaxial shifting device 24B at the positive first angle a1 in a period from the time t1 to time t2. In addition, when the second rotation angle θ2 reaches 0 degree at the time t1, the control device 30 controls the second actuator 24c of the second biaxial shifting device 24B to thereby hold the second rotation angle θ2 of the glass plate 24a of the second biaxial shifting device 24B at 0 degree in the period from the time t1 to the time t2. As a result, in the period from the time t1 to the time t2, the position of the pixel PXb contained in the composite image light LC is held at the first position P1.

In a period from the time t2 to time t3, the control device 30 controls the first actuator 24b of the second biaxial shifting device 24B to thereby change the first rotation angle θ1 of the glass plate 24a of the second biaxial shifting device 24B from the positive first angle a1 to 0 degree. Further, in the period from the time t2 to the time t3, the control device 30 controls the second actuator 24c of the second biaxial shifting device 24B to thereby change the second rotation angle θ2 of the glass plate 24a of the second biaxial shifting device 24B from 0 degree to the positive third angle b1. As a result, in the period from the time t2 to the time t3, the pixel PXb contained in the composite image light LC is shifted from the first position P1 toward the second position P2.

When the first rotation angle θ1 reaches 0 degree at the time t3, the control device 30 controls the first actuator 24b of the second biaxial shifting device 24B to thereby hold the first rotation angle θ1 of the glass plate 24a of the second biaxial shifting device 24B at 0 degree in a period from the time t3 to time t4. When the second rotation angle θ2 reaches the positive third angle b1 at the time t3, the control device 30 controls the second actuator 24c of the second biaxial shifting device 24B to thereby hold the second rotation angle θ2 of the glass plate 24a of the second biaxial shifting device 24B at the positive third angle b1 in the period from the time t3 to the time t4. As a result, in the period from the time t3 to the time t4, the position of the pixel PXb contained in the composite image light LC is held at the second position P2.

In a period from the time t4 to time t5, the control device 30 controls the first actuator 24b of the second biaxial shifting device 24B to thereby change the first rotation angle θ1 of the glass plate 24a of the second biaxial shifting device 24B from 0 degree to the negative second angle a2. In the period from the time t4 to the time t5, the control device 30 controls the second actuator 24c of the second biaxial shifting device 24B to thereby change the second rotation angle θ2 of the glass plate 24a of the second biaxial shifting device 24B from the positive third angle b1 to 0 degree. As a result, in the period from the time t4 to the time t5, the pixel PXb contained in the composite image light LC is shifted from the second position P2 toward the third position P3.

When the first rotation angle θ1 reaches the negative second angle a2 at time t5, the control device 30 controls the first actuator 24b of the second biaxial shifting device 24B to hold the first rotation angle θ1 of the glass plate 24a of the second biaxial shifting device 24B at the negative second angle a2 in the period from time t5 to time t6. In addition, when the second rotation angle θ2 reaches 0 degree at the time t5, the control device 30 controls the second actuator 24c of the second biaxial shifting device 24B to thereby hold the second rotation angle θ2 of the glass plate 24a of the second biaxial shifting device 24B at 0 degree in a period from the time t5 to time t6. As a result, in the period from the time t5 to the time t6, the position of the pixel PXb contained in the composite image light LC is held at the third position P3.

In a period from the time t6 to time t7, the control device 30 controls the first actuator 24b of the second biaxial shifting device 24B to thereby change the first rotation angle θ1 of the glass plate 24a of the second biaxial shifting device 24B from the negative second angle a2 to 0 degree. Further, in the period from the time t6 to the time t7, the control device 30 controls the second actuator 24c of the second biaxial shifting device 24B to thereby change the second rotation angle θ2 of the glass plate 24a of the second biaxial shifting device 24B from 0 degree to the negative fourth angle b2. As a result, in the period from the time t6 to the time t7, the pixel PXb contained in the composite image light LC is shifted from the third position P3 toward the fourth position P4.

When the first rotation angle θ1 reaches 0 degree at the time t7, the control device 30 controls the first actuator 24b of the second biaxial shifting device 24B to thereby hold the first rotation angle θ1 of the glass plate 24a of the second biaxial shifting device 24B at 0 degree in a period from the time t7 to time t8. Further, when the second rotation angle θ2 reaches the negative fourth angle b2 at the time t7, the control device 30 controls the second actuator 24c of the second biaxial shifting device 24B to thereby hold the second rotation angle θ2 of the glass plate 24a of the second biaxial shifting device 24B at the negative fourth angle b2 in the period from the time t7 to the time t8. As a result, in the period from the time t7 to the time t8, the position of the pixel PXb contained in the composite image light LC is held at the fourth position P4.

The control device 30 controls the third rotation angle θ3 of the glass plate 26a of the first uniaxial shifting device 26G such that the central time of the period in which the pixel PXb contained in the composite image light LC is held at the first position P1 coincides with the central time of the period in which the pixel PXg contained in the composite image light LC is held at the first position P1. Further, the control device 30 controls the third rotation angle θ3 of the glass plate 26a of the first uniaxial shifting device 26G such that the central time of the period in which the pixel PXb contained in the composite image light LC is held at the third position P3 coincides with the central time of the period in which the pixel PXg contained in the composite image light LC is held at the third position P3.

In the present embodiment, since the optical path of the red image light LR emitted from the liquid crystal panel 22R is not shifted, the position of the pixel PXr contained in the composite image light LC is the reference position P0 in the period of all the frames including the period from the time t0 to the time t8.

In FIG. 20, the period from the time t0 to the time t8 corresponds to one frame of the video signal supplied to the projector according to the sixth embodiment. The frame rate of the liquid crystal panel 22R is the same as the frame rate of the video signal supplied to the projector according to the sixth embodiment. The frame rate of the liquid crystal panel 22G is twice the frame rate of the liquid crystal panel 22R. That is, the frame rate of the liquid crystal panel 22G is twice the frame rate of the video signal. The frame rate of the liquid crystal panel 22B is four times the frame rate of the liquid crystal panel 22R. That is, the frame rate of the liquid crystal panel 22B is four times the frame rate of the video signal.

The control device 30 controls the drive timing of the liquid crystal panel 22B such that the rotation efficiency Eb of the liquid crystal panel 22B becomes the maximum value Ebm in the periods in which the pixel PXb contained in the composite image light LC is located respectively at the first position P1, the second position P2, the third position P3, and the fourth position P4. Since the drive timing of the liquid crystal panel 22B in the sixth embodiment is the same as that in the first embodiment, the description thereof will be omitted.

The control device 30 controls the drive timing of the liquid crystal panel 22G such that the rotation efficiency Eg of the liquid crystal panel 22G becomes the maximum value Egm in the periods in which the pixel PXg contained in the composite image light LC is located respectively at the first position P1 and the third position P3.

In an eleventh period from the central time (not shown) of the fourth period of the previous frame to the central time of the second period of the present frame, the control device 30 applies a voltage corresponding to an image to be displayed at the first position P1 to the liquid crystal layer of the liquid crystal panel 22G. Specifically, in the first half of the eleventh period, the control device 30 applies a positive voltage corresponding to the image to be displayed at the first position P1 to the liquid crystal layer of the liquid crystal panel 22G. In the second half of the eleventh period, the control device 30 applies a negative voltage corresponding to the image to be displayed at the first position P1 to the liquid crystal layer of the liquid crystal panel 22G.

In a twelfth period from the central time of the second period to the central time of the fourth period, the control device 30 applies a voltage corresponding to an image to be displayed at the third position P3 to the liquid crystal layer of the liquid crystal panel 22G. Specifically, in the first half of the twelfth period, the control device 30 applies a positive voltage corresponding to the image to be displayed at the third position P3 to the liquid crystal layer of the liquid crystal panel 22G. In the second half of the twelfth period, the control device 30 applies a negative voltage corresponding to the image to be displayed at the third position P3 to the liquid crystal layer of the liquid crystal panel 22G.

By the control device 30 controlling the drive timing of the liquid crystal panel 22G as described above, the rotation efficiency Eg of the liquid crystal panel 22G becomes the maximum value Egm in the periods in which the pixel PXg contained in the composite image light LC is located respectively at the first position P1 and the third position P3.

On the other hand, the control device 30 controls the drive timing of the liquid crystal panel 22R so that the rotation efficiency Er of the liquid crystal panel 22R becomes the maximum value Erm in the period of one frame. Since the drive timing of the liquid crystal panel 22R in the sixth embodiment is the same as that in the fourth embodiment, the description thereof will be omitted.

As described above, in the projector according to the sixth embodiment, the optical shifting device 50F includes the first uniaxial shifting device 26G that shifts the optical path of the green image light LG along the one axis, the frame rate of the liquid crystal panel 22R is the same as the frame rate of the video signal supplied to the projector according to the sixth embodiment, and the frame rate of the liquid crystal panel 22G is twice the frame rate of the liquid crystal panel 22R.

According to such a sixth embodiment, when the optical shifting device 50F includes the first uniaxial shifting device 26G that shifts the optical path of the green image light LG along the one axis, it is possible to prevent the deterioration in color and the decrease in brightness from being incurred due to in particular the decrease in the rotation efficiency in the red wavelength band.

The projector according to the sixth embodiment further includes the liquid crystal panel 22B that modulates the blue fourth colored light L4 to generate the blue image light LB, the dichroic prism 23 combines the red image light LR, the green image light LG, and the blue image light LB to generate the composite image light LC, the optical shifting device 50F further includes the second biaxial shifting device 24B that shifts the optical path of the blue image light LB along the two axes, and the frame rate of the liquid crystal panel 22B is four times the frame rate of the liquid crystal panel 22R.

According to such a sixth embodiment as described above, when the projector further includes the liquid crystal panel 22B and the optical shifting device 50F further includes the second biaxial shifting device 24B that shifts the optical path of the blue image light LB along the two axes, it is possible to prevent the deterioration in color and the decrease in brightness from being incurred due to in particular the decrease in the rotation efficiency in the red wavelength band while realizing the high definition of the image projected from the projector.

Although some embodiments of the present disclosure have been described hereinabove, the technical scope of the present disclosure is not limited to the embodiments described above, and various modifications can be made therein without departing from the spirit and scope of the present disclosure.

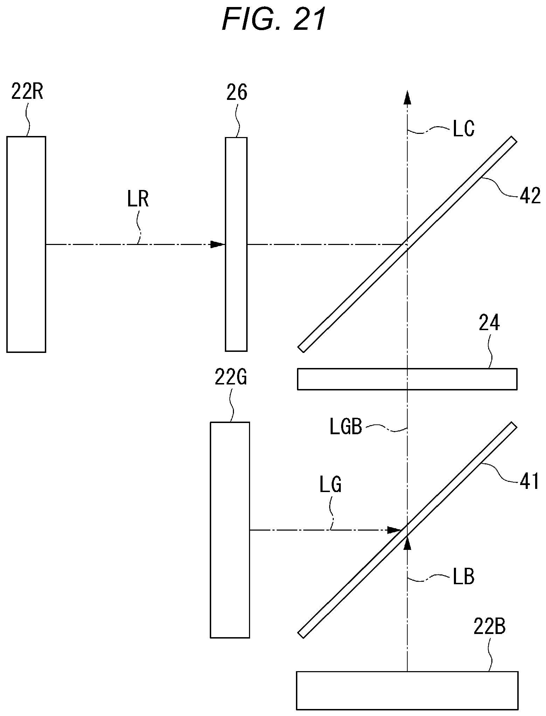

FIG. 21 is a diagram illustrating a modified example of the second embodiment. As illustrated in FIG. 21, two dichroic mirrors 41, 42 may be used instead of the dichroic prism 23, and a single biaxial shifting device 24 may be used instead of the first biaxial shifting device 24G and the second biaxial shifting device 24B.

The dichroic mirror 41 combines the green image light LG emitted from the liquid crystal panel 22G and the blue image light LB emitted from the liquid crystal panel 22B to generate fifth colored light LGB. The fifth colored light LGB emitted from the dichroic mirror 41 enters the dichroic mirror 42 via the biaxial shifting device 24. The red image light LR emitted from the liquid crystal panel 22R is incident on the dichroic mirror 42 via the uniaxial shifting device 26. The dichroic mirror 41 combines the red image light LR incident from the uniaxial shifting device 26 and the fifth colored light LGB incident from the dichroic mirror 41 to generate the composite image light LC.

### Summary of Present Disclosure

A summary of the present disclosure is appended below.

(Appendix 1) A projector including a first liquid crystal panel configured to modulate light in a first wavelength band to generate first image light, a second liquid crystal panel configured to modulate light in a second wavelength band having a center wavelength longer than a center wavelength of the first wavelength band to generate second image light, a light combining element configured to combine the first image light and the second image light to generate composite image light, a projection optical system configured to project the composite image light, and an optical shifting device configured to shift an optical path of at least one of the first image light, the second image light, and the composite image light, wherein a thickness of a liquid crystal layer of the second liquid crystal panel is larger than a thickness of a liquid crystal layer of the first liquid crystal panel, and a frame rate of the first liquid crystal panel is higher than a frame rate of the second liquid crystal panel.

According to the projector described in Appendix 1, by adopting the configuration in which the thickness of the liquid crystal layer of the second liquid crystal panel is larger than the thickness of the liquid crystal layer of the first liquid crystal panel, it is possible to prevent a rotation efficiency of the second liquid crystal panel that modulates the light in the second wavelength band having the center wavelength longer than the center wavelength of the first wavelength band to generate the second image light from deteriorating. On the other hand, since the thickness of the liquid crystal layer of the second liquid crystal panel is larger than that of the first liquid crystal panel, the response speed of the second liquid crystal panel is slower than that of the first liquid crystal panel. In contrast, according to the projector described in Appendix 1, the configuration in which the frame rate of the first liquid crystal panel is higher than the frame rate of the second liquid crystal panel is adopted. That is, since the frame rate of the second liquid crystal panel is lower than the frame rate of the first liquid crystal panel, there is no problem even when the response speed of the second liquid crystal panel is slow. As described above, according to the projector described in Appendix 1, when the optical shifting device is used, it is possible to prevent the deterioration in color and the decrease in brightness from being incurred due to in particular the decrease in the rotation efficiency in the red wavelength band.

(Appendix 2) The projector described in Appendix 1, wherein the optical shifting device includes a biaxial shifting device configured to shift the optical path of the composite image light along two axes, the frame rate of the second liquid crystal panel is twice the frame rate of the video signal supplied to the projector, and the frame rate of the first liquid crystal panel is twice the frame rate of the second liquid crystal panel.

According to the projector described in Appendix 2, when the optical shifting device includes the biaxial shifting device configured to shift the optical path of the composite image light along the two axes, it is possible to prevent the deterioration in color and the decrease in brightness from being incurred due to in particular the decrease in the rotation efficiency in the red wavelength band.

(Appendix 3) The projector according to Appendix 2, further including a third liquid crystal panel configured to modulate light in a third wavelength band having a center wavelength shorter than the center wavelength of the first wavelength band to generate third image light, wherein the light combining element combines the first image light, the second image light, and the third image light to generate the composite image light, and a frame rate of the third liquid crystal panel is twice the frame rate of the second liquid crystal panel.

According to the projector described in Appendix 3, when the projector further includes the third liquid crystal panel, it is possible to prevent the deterioration in color and the decrease in brightness from being incurred due to in particular the decrease in the rotation efficiency in the red wavelength band while realizing the high definition of the image projected from the projector.

(Appendix 4) The projector described in Appendix 1, wherein the optical shifting device includes a first biaxial shifting device configured to shift the optical path of the first image light along two axes, and a uniaxial shifting device configured to shift the optical path of the second image light along one axis, the frame rate of the second liquid crystal panel is twice the frame rate of the video signal supplied to the projector, and the frame rate of the first liquid crystal panel is twice the frame rate of the second liquid crystal panel.

According to the projector described in Appendix 4, when the optical shifting device includes the first biaxial shifting device configured to shift the optical path of the first image light along the two axes and the uniaxial shifting device configured to shift the optical path of the second image light along the one axis, it is possible to prevent the deterioration in color and the decrease in brightness from being incurred due to in particular the decrease in the rotation efficiency in the red wavelength band.

(Appendix 5) The projector according to Appendix 4, further including a third liquid crystal panel that modulates light in a third wavelength band having a center wavelength shorter than the center wavelength of the first wavelength band to generate third image light, wherein the light combining element combines the first image light, the second image light, and the third image light to generate the composite image light, the optical shifting device further includes a second biaxial shifting device configured to shift an optical path of the third image light along two axes, and a frame rate of the third liquid crystal panel is twice the frame rate of the second liquid crystal panel.

According to the projector described in Appendix 5, when the projector further includes the third liquid crystal panel and the optical shifting device further includes the second biaxial shifting device configured to shift the optical path of the third image light along the two axes, it is possible to prevent the deterioration in color and the decrease in brightness from being incurred due to in particular the decrease in the rotation efficiency in the red wavelength band while realizing the high definition of the image projected from the projector.

(Appendix 6) The projector described in Appendix 1, wherein the optical shifting device includes a biaxial shifting device configured to shift the optical path of the composite image light along two axes, and a uniaxial shifting device configured to shift the optical path of the second image light along one axis, the frame rate of the second liquid crystal panel is twice the frame rate of the video signal supplied to the projector, and the frame rate of the first liquid crystal panel is twice the frame rate of the second liquid crystal panel.

According to the projector described in Appendix 6, when the optical shifting device includes the biaxial shifting device configured to shift the optical path of the composite image light along the two axes and the uniaxial shifting device configured to shift the optical path of the second image light along the one axis, it is possible to prevent the deterioration in color and the decrease in brightness from being incurred due to in particular the decrease in the rotation efficiency in the red wavelength band.

(Appendix 7) The projector according to Appendix 6, further including a third liquid crystal panel configured to modulate light in a third wavelength band having a center wavelength shorter than the center wavelength of the first wavelength band to generate third image light, wherein the light combining element combines the first image light, the second image light, and the third image light to generate the composite image light, and a frame rate of the third liquid crystal panel is twice the frame rate of the second liquid crystal panel.

According to the projector described in Appendix 7, when the projector further includes the third liquid crystal panel, it is possible to prevent the deterioration in color and the decrease in brightness from being incurred due to in particular the decrease in the rotation efficiency in the red wavelength band while realizing the high definition of the image projected from the projector.

(Appendix 8) The projector described in Appendix 1, wherein the optical shifting device includes a first uniaxial shifting device configured to shift the optical path of the first image light along one axis, the frame rate of the second liquid crystal panel is same as the frame rate of the video signal supplied to the projector, and the frame rate of the first liquid crystal panel is twice the frame rate of the second liquid crystal panel.

According to the projector described in Appendix 8, when the optical shifting device includes the first uniaxial shifting device configured to shift the optical path of the first image light along the one axis, it is possible to prevent the deterioration in color and the decrease in brightness from being incurred due to in particular the decrease in the rotation efficiency in the red wavelength band.

(Appendix 9) The projector according to Appendix 8, further including a third liquid crystal panel that modulates light in a third wavelength band having a center wavelength shorter than the center wavelength of the first wavelength band to generate third image light, wherein the light combining element combines the first image light, the second image light, and the third image light to generate the composite image light, the optical shifting device further includes a second uniaxial shifting device configured to shift an optical path of the third image light along one axis, and a frame rate of the third liquid crystal panel is twice the frame rate of the second liquid crystal panel.

According to the projector described in Appendix 9, when the projector further includes the third liquid crystal panel and the optical shifting device further includes the second uniaxial shifting device configured to shift the optical path of the third image light along the one axis, it is possible to prevent the deterioration in color and the decrease in brightness from being incurred due to in particular the decrease in the rotation efficiency in the red wavelength band while realizing the high definition of the image projected from the projector.

(Appendix 10) The projector according to Appendix 8, further including a third liquid crystal panel that modulates light in a third wavelength band having a center wavelength shorter than the center wavelength of the first wavelength band to generate third image light, wherein the light combining element combines the first image light, the second image light, and the third image light to generate the composite image light, the optical shifting device further includes a biaxial shifting device configured to shift an optical path of the third image light along two axes, and a frame rate of the third liquid crystal panel is four times the frame rate of the second liquid crystal panel.

According to the projector described in Appendix 10, when the projector further includes the third liquid crystal panel and the optical shifting device further includes the biaxial shifting device configured to shift the optical path of the third image light along the two axes, it is possible to prevent the deterioration in color and the decrease in brightness from being incurred due to in particular the decrease in the rotation efficiency in the red wavelength band while realizing the high definition of the image projected from the projector.

(Appendix 11) The projector described in Appendix 1, wherein the optical shifting device includes a first biaxial shifting device configured to shift the optical path of the first image light along two axes, the frame rate of the second liquid crystal panel is same as the frame rate of the video signal supplied to the projector, and the frame rate of the first liquid crystal panel is four times the frame rate of the second liquid crystal panel.

According to the projector described in Appendix 11, when the optical shifting device includes the first biaxial shifting device configured to shift the optical path of the first image light along the two axes, it is possible to prevent the deterioration in color and the decrease in brightness from being incurred due to in particular the decrease in the rotation efficiency in the red wavelength band.

(Appendix 12) The projector according to Appendix 11, further including a third liquid crystal panel that modulates light in a third wavelength band having a center wavelength shorter than the center wavelength of the first wavelength band to generate third image light, wherein the light combining element combines the first image light, the second image light, and the third image light to generate the composite image light, the optical shifting device further includes a second biaxial shifting device configured to shift an optical path of the third image light along two axes, and a frame rate of the third liquid crystal panel is four times the frame rate of the second liquid crystal panel.

According to the projector described in Appendix 12, when the projector further includes the third liquid crystal panel and the optical shifting device further includes the second biaxial shifting device configured to shift the optical path of the third image light along the two axes, it is possible to prevent the deterioration in color and the decrease in brightness from being incurred due to in particular the decrease in the rotation efficiency in the red wavelength band while realizing the high definition of the image projected from the projector.

## Claims

1. A projector comprising:
a first liquid crystal panel configured to modulate light in a first wavelength band to generate first image light;
a second liquid crystal panel configured to modulate light in a second wavelength band having a center wavelength longer than a center wavelength of the first wavelength band to generate second image light;
a light combining element configured to combine the first image light and the second image light to generate composite image light;
a projection optical system configured to project the composite image light; and
an optical shifting device configured to shift an optical path of at least one of the first image light, the second image light, and the composite image light, wherein
a thickness of a liquid crystal layer of the second liquid crystal panel is larger than a thickness of a liquid crystal layer of the first liquid crystal panel, and
a frame rate of the first liquid crystal panel is higher than a frame rate of the second liquid crystal panel.

2. The projector according to claim 1, wherein
the optical shifting device includes a biaxial shifting device configured to shift the optical path of the composite image light along two axes,
the frame rate of the second liquid crystal panel is twice the frame rate of the video signal supplied to the projector, and
the frame rate of the first liquid crystal panel is twice the frame rate of the second liquid crystal panel.

3. The projector according to claim 2, further comprising
a third liquid crystal panel configured to modulate light in a third wavelength band having a center wavelength shorter than the center wavelength of the first wavelength band to generate third image light, wherein
the light combining element combines the first image light, the second image light, and the third image light to generate the composite image light, and
a frame rate of the third liquid crystal panel is twice the frame rate of the second liquid crystal panel.

4. The projector according to claim 1, wherein
the optical shifting device includes a first biaxial shifting device configured to shift the optical path of the first image light along two axes, and a uniaxial shifting device configured to shift the optical path of the second image light along one axis,
the frame rate of the second liquid crystal panel is twice the frame rate of the video signal supplied to the projector, and
the frame rate of the first liquid crystal panel is twice the frame rate of the second liquid crystal panel.

5. The projector according to claim 4, further comprising
a third liquid crystal panel that modulates light in a third wavelength band having a center wavelength shorter than the center wavelength of the first wavelength band to generate third image light, wherein
the light combining element combines the first image light, the second image light, and the third image light to generate the composite image light,
the optical shifting device further includes a second biaxial shifting device configured to shift an optical path of the third image light along two axes, and
a frame rate of the third liquid crystal panel is twice the frame rate of the second liquid crystal panel.

6. The projector according to claim 1, wherein
the optical shifting device includes a biaxial shifting device configured to shift the optical path of the composite image light along two axes, and a uniaxial shifting device configured to shift the optical path of the second image light along one axis,
the frame rate of the second liquid crystal panel is twice the frame rate of the video signal supplied to the projector, and
the frame rate of the first liquid crystal panel is twice the frame rate of the second liquid crystal panel.

7. The projector according to claim 6, further comprising
a third liquid crystal panel configured to modulate light in a third wavelength band having a center wavelength shorter than the center wavelength of the first wavelength band to generate third image light, wherein
the light combining element combines the first image light, the second image light, and the third image light to generate the composite image light, and
a frame rate of the third liquid crystal panel is twice the frame rate of the second liquid crystal panel.

8. The projector according to claim 1, wherein
the optical shifting device includes a first uniaxial shifting device configured to shift the optical path of the first image light along one axis,
the frame rate of the second liquid crystal panel is same as the frame rate of the video signal supplied to the projector, and
the frame rate of the first liquid crystal panel is twice the frame rate of the second liquid crystal panel.

9. The projector according to claim 8, further comprising
a third liquid crystal panel that modulates light in a third wavelength band having a center wavelength shorter than the center wavelength of the first wavelength band to generate third image light, wherein
the light combining element combines the first image light, the second image light, and the third image light to generate the composite image light,
the optical shifting device further includes a second uniaxial shifting device configured to shift an optical path of the third image light along one axis, and
a frame rate of the third liquid crystal panel is twice the frame rate of the second liquid crystal panel.

10. The projector according to claim 8, further comprising
a third liquid crystal panel that modulates light in a third wavelength band having a center wavelength shorter than the center wavelength of the first wavelength band to generate third image light, wherein
the light combining element combines the first image light, the second image light, and the third image light to generate the composite image light,
the optical shifting device further includes a biaxial shifting device configured to shift an optical path of the third image light along two axes, and
a frame rate of the third liquid crystal panel is four times the frame rate of the second liquid crystal panel.

11. The projector according to claim 1, wherein
the optical shifting device includes a first biaxial shifting device configured to shift the optical path of the first image light along two axes,
the frame rate of the second liquid crystal panel is same as the frame rate of the video signal supplied to the projector, and
the frame rate of the first liquid crystal panel is four times the frame rate of the second liquid crystal panel.

12. The projector according to claim 11, further comprising
a third liquid crystal panel that modulates light in a third wavelength band having a center wavelength shorter than the center wavelength of the first wavelength band to generate third image light, wherein
the light combining element combines the first image light, the second image light, and the third image light to generate the composite image light,
the optical shifting device further includes a second biaxial shifting device configured to shift an optical path of the third image light along two axes, and
a frame rate of the third liquid crystal panel is four times the frame rate of the second liquid crystal panel.
